# EUROPEAN PATENT APPLICATION

(11) **EP 4 718 782 A1**
(43) Date of publication of application: **01.04.2026**
(21) Application number: 25205190.9
(22) Date of filing: 29.09.2025
(51) Int. Cl.: H04L 9/40

(54) **DEVICE ATTESTATION IN MANAGED NETWORKS**

(30) Priority: 30.09.2024 US 202418901515
(71) Applicant: Mellanox Technologies, Ltd., 2069200 Yokneam (IL)
(72) Inventor: ORENBACH, Meni, 2069200 Yokneam (IL); TAHAR, Michael, 2069200 Yokneam (IL); ALDER, Fritz Daniel, 2069200 Yokneam (IL); ATAMLI, Ahmad, 2069200 Yokneam (IL); SHIFFRIN, Dmitri, 2069200 Yokneam (IL)
(74) Representative: Mathys & Squire

(57) **Abstract**

Approaches presented herein provide for the attestation of devices in managed networks, in order to verify state and establish trust in those devices as well as in the managed network and/or subnets. The devices in a network, including devices such as network switches, can perform self-attestation by transmitting attestation evidence using one or more network messages. One or more verifiers can verify the attestation evidence and determine which devices or subnets are trusted. Data and messages can then be routed along trusted paths through a trusted network or subnet, such that all devices along those paths are trusted devices. In order to reduce the volume of attestation traffic for large networks, a network device can provide attestation evidence to a verifier that is connected to that device, rather than propagating all evidence for all devices to a single verifier. Once verified, a list of trusted devices can be propagated rather than the instances of evidence that were used for the verification.

## Description

### TECHNICAL FIELD

This disclosure relates to attestation of networked devices, and in at least one embodiment relates to the ability to provide attestation for an entire network (or subnet) of devices, including devices such as network switches, as well as providing for a reduction in attestation traffic by allowing single devices to provide attestation messages for a plurality of other devices in a respective network or subnet.

### BACKGROUND

In various computing environments - such as data centers, server farms, or cloud resource environments - shared resources may be accessible to multiple different parties. In order to ensure security of operations in such an environment, it can be important to determine which devices can be "trusted" to perform those operations. A mechanism such as attestation can be used to verify the authenticity and integrity of the hardware and/or software of a given computing device or physical resource, in order to establish trust in that device or resource. Prior attestation approaches are limited, in that they provide for attestation of individual network nodes, devices, or endpoints, but do not support attestation of entire network topologies. Such limitations can allow unverified devices to be configured to access an otherwise secure network. Further, various existing approaches transfer attestation mechanisms over relatively slow interfaces or channels, such as a system management bus (SMBus) that allows various system component chips to communicate with each other and the rest of the system. These relatively slow communications can impact speed of attestation, particularly when many devices are involved.

### SUMMARY

The invention is defined by the claims. In order to illustrate the invention, aspects and embodiments which may or may not fall within the scope of the claims are described herein.

Approaches presented herein provide for the attestation of devices in managed networks, in order to verify state and establish trust in those devices as well as in the managed network and/or subnets. The devices in a network, including devices such as network switches, can perform self-attestation by transmitting attestation evidence using one or more network messages. One or more verifiers can verify the attestation evidence and determine which devices or subnets are trusted. Data and messages can then be routed along trusted paths through a trusted network or subnet, such that all devices along those paths are trusted devices. In order to reduce the volume of attestation traffic for large networks, a network device can provide attestation evidence to a verifier that is connected to that device, rather than propagating all evidence for all devices to a single verifier. Once verified, a list of trusted devices can be propagated rather than the instances of evidence that were used for the verification.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

Various embodiments in accordance with the present disclosure will be described with reference to the drawings, in which:
FIG. 1 illustrates an example network architecture that can be used to perform computing operations, according to at least one embodiment.
FIG. 2A illustrates an approach to performing discovery, attestation, and configuration of a subnet, according to at least one embodiment.
FIG. 2B illustrates an approach to performing attestation for a new device connected to a network, according to at least one embodiment.
FIG. 3A illustrates an extended header useful for transmitting information related to attestation verification, according to at least one embodiment.
FIG. 3B illustrates an example process that can be performed to attest for an entire network, or subnet, according to at least one embodiment.
FIG. 4A illustrates an example network topology for which attestation can be performed, according to at least one embodiment.
FIG. 4B illustrates an example process that can be performed for reduced attestation in a network, or subnet, according to at least one embodiment.
FIG. 5 illustrates an example data center system, according to at least one embodiment;
FIG. 6 is a block diagram illustrating a computer system, according to at least one embodiment;
FIG. 7 is a block diagram illustrating a computer system, according to at least one embodiment;
FIG. 8 illustrates a computer system, according to at least one embodiment;
FIG. 9 illustrates a computer system, according to at least one embodiment;
FIG. 10 illustrates exemplary integrated circuits and associated graphics processors, according to at least one embodiment;
FIGS. 11A, 11B illustrate exemplary integrated circuits and associated graphics processors, according to at least one embodiment;
FIG. 12 illustrates a computer system, according to at least one embodiment;
FIG. 13A illustrates a parallel processor, according to at least one embodiment;
FIG. 13B illustrates a partition unit, according to at least one embodiment;
FIG. 14 illustrates at least portions of a graphics processor, according to one or more embodiments.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Approaches in accordance with various illustrative embodiments can provide for the attestation of devices in managed networks, in order to verify state and establish trust in those devices. Various devices - including network devices such as network switches - can perform self-attestation by providing an attestation message with the appropriate evidential data. The evidential data can be used by another receiving device to verify or validate such attestation, and the results of the attestation can be provided to a requesting or relying party. Such approaches can support attestation of entire network topologies, including for any device that attempts to connect to a given network. At least one embodiment can take advantage of one or more existing types of management messages (often used in managed networks) to use to route attestation information across a network. During a discovery process, for example, a controller or network manager can request an attestation report for devices connected to a network, so that the trustworthiness of various devices can be verified before configuring the managed network. Devices that cannot be verified can be isolated or not allowed to connect to the network, or may be excluded from trusted network paths. Trusted and untrusted devices can also be allocated to separate subnets.

Attestation of a large network or subset may require attestation messages to be sent for a large number of devices. In order to reduce traffic associated with these attestation messages, a given device (e.g., a switch) can verify (in parallel) connected devices that are at a lower level of the network topology, for example, and can provide a single attestation message for the verifying device and all connected devices that it verified, thus reducing the number of attestation messages to be forwarded to a controller (e.g., a core switch) and/or verifier at a higher level of the network topology. Such distributed attestation and verification, with reduction in message volume, can significantly improve performance and reduce resource requirements for validating trust across a network. Further, being able to verify an entire network topology via attestations allows network administrators to gain a holistic understanding of the network that is backed by cryptography and provides a higher level of trust in the network.

Variations of this and other such functionality can be used as well within the scope of the various embodiments as would be apparent to one of ordinary skill in the art in light of the teachings and suggestions contained herein.

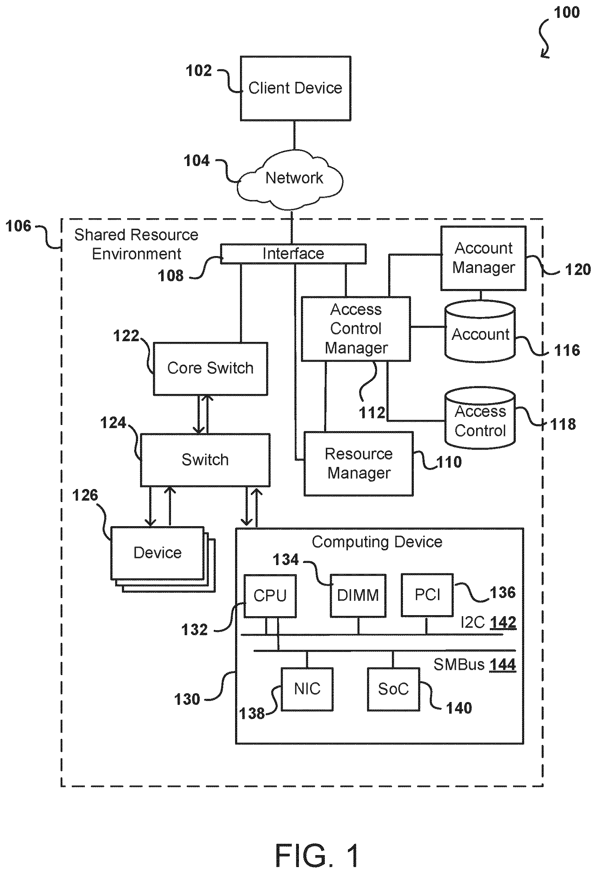

There are various computing environments in which processing of data can be performed. Examples of such environments include data centers and multi-tenant resource provider environments, such as may provide a set of cloud computing services. These environments can be used to perform various computing operations on behalf of a number of different users, parties, or entities, such as by using a pool of available resource capacity. FIG. 1 illustrates an example architecture 100 for such an environment that can be used in accordance with at least one embodiment. In this example, a user is able to use a client device 102 to submit one or more requests to access one or more resources, or to perform a task using one or more resources, among other such options. Such a request can be submitted over at least one network 104, such as the Internet or a cellular network, and received to an interface, address, or endpoint in a shared resource environment 106. The request can be received to an interface, such as an application programming interface (API) of an interface layer 108. In this example, a request from a client device 102 may first need to be analyzed to determine whether the client device, user, or other entity associated with the request has access to one or more resources to be used to process the request, as well as to determine whether the type of access permitted allows for performance of the requested operation.

In this example, information for the request can be directed to an access control manager 112, or other such component, system, or service. The access control manager 112 can perform various tasks to determine and/or manage access to a set of shared resources, such as to extract relevant information from a received request and compare information for the request, directly or with assistance from an account manager 120, against information in an account repository 116 or other such location. This operation can be used to determine whether the request is associated with a valid account associated with the shared resource environment, such as an account maintained by a user with a provider of the shared resource environment 106. Once determined, that account information can be used to determine the type of access permissible to perform one or more operations associated with the request. This may include, for example, determining (or verifying) an authorized user identifier associated with the request, then using that user identifier to determine access permissions associated with that user identifier, as may be stored in an access control data repository 118 or other such location. In at least one embodiment, an access control manager 112 may include various modules to perform specific tasks, such as an authorization module and an authentication module, or may run on a network server that also has these modules available for use with the access control manager 112, among other such options.

Once a set of access permissions is identified that is associated with the request, the access control manager 112 (or an associated process) can determine whether the necessary permissions exist in the set to process the request which was received from the client device and associated with the user identifier. If the appropriate permissions are determined to exist or be available, the access control manager 112 can direct information for the request to one or more shared resources 126 (and/or potentially dedicated resources) in the shared resource environment 106. In some embodiments, the access control manager 112 may work with a resource manager 110 to determine a specific instance of a type of resource to be used to perform an operation with respect to the request, where the resource manager 110 can perform other types of operations as needed, such as to allocate additional capacity of a type of resource, launch a new compute instance, or perform another such task associated with the request.

Once a user (or other entity) is granted access to a set of resources, or pool of resource capacity, requests to perform various operations can be directed to the allocated devices. This may include, for example, routing the request through various layers of a network topology, such as directing the request through a core switch 122 at a top level, and a network switch 124 at an intermediate level, to a selected device 126 (or set of devices) at a lowest level, among other such options. There may be other devices in such a network architecture as well, as may include routers and load balancers, among other such options. The request can be processed by one or more resources (physical or virtual) and then a result returned to the client device 102 or otherwise directed to an intended recipient or destination.

In addition to ensuring that a given user should have access to a given resource, or pool of resource capacity, as well as the scope of that access, it can be desirable to ensure that the resources that are to be used to perform operations on behalf of that user are also secure or trusted to perform those operations, particularly those involving sensitive, confidential, or other types of restricted operations. Attestation is one approach that can be used to provide such security for a data center or other networked environment, as attestation provides an unforgeable proof for the trustworthiness of a given node or resource. This may include, for example, a computing device 130 such as a server, or components within a computing device, such as a system on chip (SoC) 140 or network interface card (NIC) 138. In embodiments where processing may be performed in part using a processor of a NIC or SoC, for example, a security policy might indicate that it is necessary to verify trust in the NIC 138 and/or SoC 140 as well as the computing device 130, since a component such as a NIC 138 may be replaced or separately accessible, and thus may be subject to various other security vulnerabilities. In existing approaches, components such as processors (CPU(s)) 132 (as well as connected accelerators), NICs 138, and SoCs 140 can perform self-attestation, by sending attestation messages to a verifying component or device to establish trust. In modern computing, an attestation will often be part of an initial step during the lifecycle of the interaction between a remote program and a local program, before any secrets are shared or any input or output data is relied upon. A computing device 130 may have various busses or communication channels that allow for communication between components, such as an I2C bus 142 or SMBus 144, among other such options. An I2C bus 142 will typically connect components such as a CPU 132 with memory such as a DIMM 134 and/or to a PCI device 136. In various existing implementations, attestation messages are typically sent over an SMBus 144, allowing for a component such as a NIC 138 to send an attestation message to a CPU 132, for example, to perform verification.

As mentioned, attestation generally refers to the process of verifying the state of a device (e.g., a physical or virtual device) to establish trust into actions performed by that device. The device may be considered as a node in a network topology, where the topology consists of various interconnected nodes at various levels, such as the topology discussed with respect to FIG. 1. In an example attestation architecture, a node (such as a computing device 130 or SoC 140) that wishes to prove itself to another party can become an attester (or self-attester) and can generate at least one instance of supporting evidence. This evidence can include, for example, one or more claims about the state of the attester, as may include measurements about its boot or runtime state. This evidence can be appended with an endorsement (by/from an endorser) that provides a guarantee of the correctness of one or more claims made in the evidence. An example of such an endorser is the hardware manufacturer for the device that vouches for the evidence by signing the evidence with a cryptographic key that was embedded into the device during manufacturing. The bundle of evidence and endorsement can then be consumed by another party, referred to as a "verifier," to validate the claims and assess their correctness and trustworthiness. To do so, a verifier can take in additional input, as may include an appraisal policy for the evidence (i.e., the trustworthiness of the endorser), as well as one or more reference values for the provided evidence (i.e., the expected state that the attester wants to prove it currently is in). Based at least in part on this data, a verifier can make a decision whether an attester is in an expected state and is endorsed by a trusted endorser. This decision, also referred to herein as an attestation result, can then be consumed by a recipient of the attestation, referred to herein as a relying party, to gain trust into the attester according to the policy of the relying party. As discussed in more detail later herein, a verifier for a network (or subnet) deployment may comprise a connected node at a higher level of the network topology, such as a switch 124 acting as a verifier for a self-attesting computing device 130. In other instances, devices at a same level of a network topology may serve as an attestor or verifier, such as where a NIC 138 might function as a verifier for a SoC 140, and vice versa, as may depend in part upon the security policy and/or path of trust.

Once established, such trust can be used in various ways for various purposes. For example, a trusted node can be relied upon to perform certain actions or behave in a certain way, and communication can be established with the node via a secure channel. To enhance security, the secure channel can be shielded by the attestation process itself. In addition to providing such trust within a device, or for specific devices, such attestation approaches can be used for entire network topologies. This may include verifying trust in all (or at least a subset of) nodes in a given network topology, or subnet, and directing traffic based in part upon the trusted nodes or subnets. An example security policy for an entire network is to restrict unverified nodes from accessing the network of a given data center.

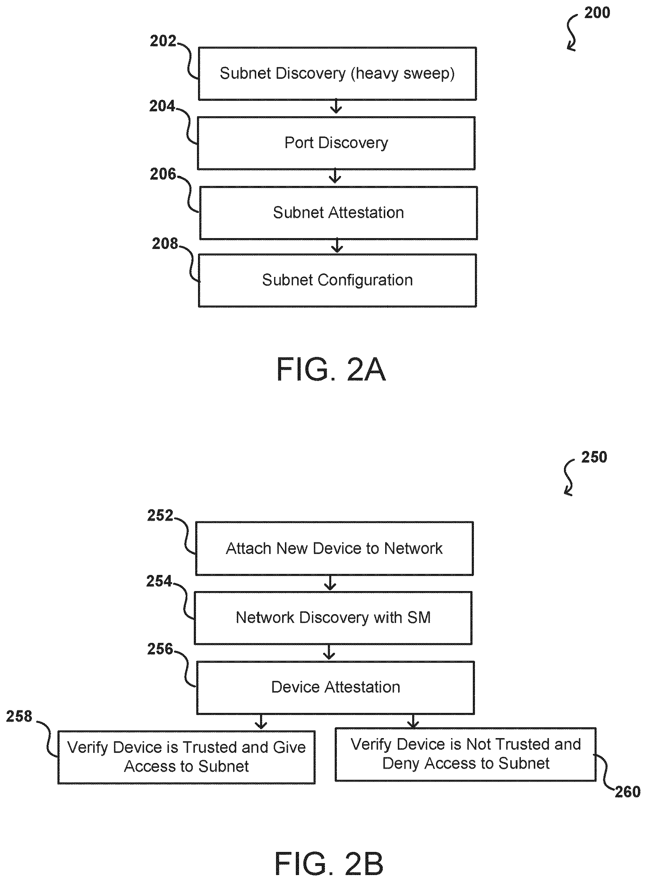

In at least one embodiment, a component such as a network controller can request an attestation report, and can use this report to attempt to verify trustworthiness of various devices prior to configuring the managed network. FIG. 2A illustrates example steps of a discovery and attestation process 200 that can be performed according to at least one embodiment. In this example, the report is to be generated with respect to a specific subset of a resource environment. A component such as a subnet manager (SM) can perform a sweep of the network (such as a "heavy" sweep for InfiniBand-based implementations), as part of a subnet discovery process 202, to attempt to discover all devices that are members of that subnet. The SM can use an additional discovery process 204, or additional steps of the same discovery process, to attempt to discover the physical topology of the network ports of the discovered devices on that subnet. The SM can then trigger appropriate attestation 206 to attempt to verify trust in all the devices of the subnet. In this example, all devices can perform self-attestation and send the attestation information directly (or indirectly) to the subnet manager for verification. If trust can be established in the entire subnet, or at least a sufficient portion of the subnet, then a subnet configuration process can be performed 208, which may include indicating which trusted paths through the subnet are to be used for specific operations based on the trust determined for devices in that subnet, including switches and other networking devices. An attestation procedure can be used in at least one embodiment, where an SM can use the attestations to manage the configurations of at least some of the devices themselves. In an ethernet-based implementation, this could be performed using an Open Virtual Network (OVN)-based approach. Several use cases can be enabled by this additional attestation, with one being that a subnet controller can, in case an unauthorized device is discovered, isolate the device from the network.

Approaches in accordance with at least one embodiment can provide for additional software-defined networking attestation in managed networks. Such approaches can be used to place attested devices into different networks, efficiently isolating them from each other on a network topology basis. FIG. 2B illustrates such an attestation process 250 that may be performed for the scenario of a device joining an existing network. The joining can be a result of, for example, a hot plugging of the device into the network. Trusted devices can be given access in the subnet in question, while untrusted devices can be denied access to that subnet. This stands in stark contrast to the conventional attestation methods where the isolation happens on an application layer basis after successful network connection has already been established. Such an approach can serve as a highly effective isolation mechanism between unattested network devices, preventing a wider range of attacks. A similar process can be applied where a network is bootstrapped. Here, initial devices can be distributed onto different subnets based on, for example, the SM policy and the verified attestations.

The example attestation process 250 illustrated in FIG. 2B can be performed whenever a new device is to be attached to a network, or subnet, after attestation of the network or subnet has been performed. Such processes may be performed at other times as well, such as in response to a received attestation request or as part of a periodic security check, among other such options. In this example, a new device is attached 252 to a network or subnet. A subnet manager (or other such component or process) can detect the new device as part of a network discovery process 254. The SM can then request attestation 256 of the new device before any data can be routed to, or from, the new device. If the SM receives attestation evidence that allows the SM to verify 258 that the new device is a trusted device, then the device can be tagged (or otherwise indicated to devices of the subnet) as trusted and the new device can be given access to other devices on the subnet. If the SM is unable to verify that the new device is trusted, or is able to verify 260 that the new device should not be trusted, then the new device can be denied access to other devices on the subnet, and data can be prevented from being routed to the new device.

Various attestation and communication approaches can be used for such tasks. In at least one embodiment, attestation can take advantage of at least some existing functionality, which can help to simplify deployment and management of at least some of these tasks and devices. For example, existing managed networks often rely on special management messages for tasks such as discovery, configuration, and telemetry. Different technologies use different approaches to such management messages. For example, InfiniBand uses Management Datagrams (MADs), and there are multiple possibilities use with Ethernet, one possibility being the Simple Network Management Protocol (SNMP) that runs as an application layer on top of the connectionless User Datagram Protocol (UDP). Approaches in accordance with at least one embodiment can use these (or similar) management messages to transport Management Component Transport Protocol (MCTP) messages that tunnel Security Protocol and Data Model (SPDM) attestations. These approaches can come with multiple implications. For example, current systems transport SPDM messages via an SMBus or other Buses where a clear point-to-point communication is guaranteed. When using management messages to transport SPDM messages, this point-to-point nature typically is to be maintained to safeguard the authenticity and origin of the tunneled attestation message. Since attestation messages tend to be larger than traditional telemetry or configuration messages, transporting them via the network can have considerable performance benefits. Further, since attestation messages are transported via management messages, approaches disclosed herein can be applied to both in-band as well as out-of-band managed networks.

Unfortunately, such modes of operation may contradict at least some current approaches to network management, specifically control plane management schemes such as Software-Defined Networking (SDN). SDN is a style of network management in which the network is split into multiple planes: a control plane, a data plane, and a management plane. Where the data plane serves as the transport for the actual data transmissions between conventional applications on top of network nodes, the control plane is used to perform routing configurations. Separating these two allows for more flexibility in forwarding and routing policies. The management plane allows for easy administrative configuration of the network, as well as for monitoring and telemetry of the network. By splitting the network into these three planes, SDN allows for the changing of characteristics of the network in software that in legacy networks could only be made by changing the physical configuration of the network. Since data plane networks and control/management plane networks are often separated, they are also referred to as in-band (for data plane) and out-of-band (for the control and management plane). The application that takes the role of managing the network as a whole is referred to as an SDN controller. In the context of attestation, node-based attestation does not allow SDNs to be aware of the attestation result. Thus, unverified devices may be configured to access the network. Without in-network attestation being available, each data center operator may need to resort to defining a proprietary scheme to manage trust in the network.

The SPDM protocol (DMTF) is being shaped as an industry standard for attestation, and is supported in recent networking systems-on-chip (SoCs). However, SPDM tunneling is only standardized through MCTP and peripheral component interconnect express (PCIe) data object exchange (DOE). MCTP-based attestation is used by data center operators for platform management through a baseboard management controller (BMC). PCIe DOE is intended to be used by tenants, and thus is less useful for managing trust in a data center or similar environment. For in-network attestation, devices on a network are attested during network discovery, and before any data may be passed through them. Such an approach reduces the attack surface and naturally lends itself to the operational model of various network managers.

An attestation approach according to at least one embodiment can use a protocol such as SPDM tunneled over MCTP, which is supported by existing networking products. However, instead of tunneling MCTP over SMBus to a BMC, such an approach can take advantage of management messages in the network. These types of messages are typically used by a component, such as a network controller, to manage the network devices in an environment (or subnet in that environment, etc.). This can include performing tasks, such as configuring routing tables and port states, among other such tasks. These messages can be in-band or out-of-band of the managed network infrastructure, as discussed in more detail elsewhere herein. In at least one embodiment, a component such as a network controller can request an attestation report, and can use this report to attempt to verify trustworthiness of various devices prior to configuring the managed network.

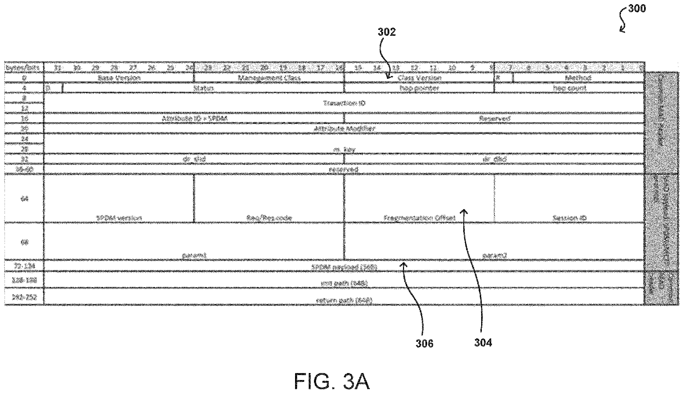

An approach in accordance with at least one embodiment can allow for use of MADs as attestation-carrying messages. An example MAD extension 300 is illustrated in FIG. 3A. In at least one embodiment, a header 302 of a MAD can be extended to contain common information such as version, class, method, attribute, and transaction ID, among other such options. A MAD payload 304 can include MCTP-specific information, such as session ID, fragmentation offset, and request/response code, as well as SPDM-specific information 306, such as may include SPDM version, parameters, and payload. Using MADs for such purposes can provide several potential benefits. For example, an InfiniBand SM can manage the network via MADs, using variations of existing messages to attest all network products in an environment such as a data center. Such an SM may also periodically invoke SPDM attestation to verify that the state of each network device did not change based on the threat and risk management policy of the data center operator. Tunnelling MCTP over MADs rather than SMBus also benefits from the higher bandwidth available with MADs. Specifically, MAD bandwidth can currently be around 500Mb/second, whereas SMBus bandwidth is currently around 800Kb/second. Even with SMBus 3.0, which may reach around 8Mb/second, MADs are faster by two orders of magnitude. It can be noted that with MCTP, the SPDM payload is 64B out of the 256B total MCTP packet size. Using MADs or similar approaches, in-network SPDM-based attestation can reach a rate of 128Mb/second or higher.

Managed networks can use subnets, or other such divisions or clusters, to logically separate networked devices from each other. Approaches in accordance with at least one embodiment can use attestation as part of a discovery and configuration process in a managed network to logically separate, and clearly identify, both trusted and untrusted devices, such as by using a process as disclosed with respect to FIG. 1 that uses workflow for a network discovery that includes an attestation step. Being able to identify which parts of the network are trusted by which devices can be used in a range of policies and use cases by one or more network manager components or controllers, such as a software-defined network (SDN) agent or SDN controller for an SDN-based implementation. In example use cases presented herein, InfiniBand will be used as a running example, with a network controller referred to as an InfiniBand SM. It should be understood, however, that aspects of the various embodiments also can be used with other technologies, protocols, and/or systems, such as for Ethernet where tasks of the SM could be taken over by, for example, the OVN or the Open Virtual Switch (OVS). Such an approach can also be used for tasks such as trusted path routing. This can include, for example, selecting an ideal, trusted path for the sender. An SM can manage a global policy, or each sender can provide their own policy, among other such options. A SM can then route all messages, or only specific messages, of a sender via a specific route.

In at least one embodiment, attestation can be used with InfiniBand Management Datagrams (MADs) that serve as the transport for SPDM attestation messages, tunneled via the Management Component Transport Protocol (MCTP). Such approaches can be used for implementations that do not use InfiniBand, however, and can be independent of the specific type of transport used for MCTP (or other such) messages. Transporting these messages via the network instead of via a conventional SMBus can have benefits when it comes to speed, as the bandwidth of an SMBus can be limited (e.g., limited to 800Kb per second) while network transport may be considerably faster (e.g., 500Mb/sec for the example of MAD). Transporting attestation messages via the network can be beneficial for use cases other than network management as well, and can also help improve the speed of attestations that are currently transported via buses or other such mechanisms.

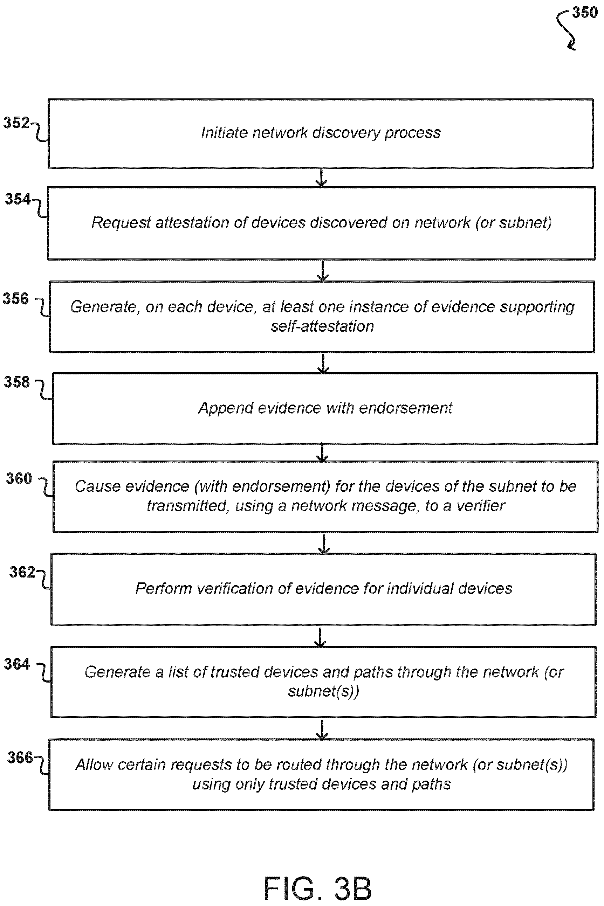

FIG. 3B illustrates an example process 350 that can be performed for determine trust in a network, or subnet, according to at least one embodiment. It should be understood that for this and other processes discussed herein that there may be additional, fewer, or alternative steps performed in similar or alternative orders, or at least partially in parallel, within the scope of the various embodiments. Further, although discussed with respect to subnets and managed networks, for example, it should be understood that advantages of such a process can be obtained for other types and/or collections of devices for which trust can be important as well within the scope of various embodiments. In this example, a network discovery process is initiated 352 to discover the various devices forming a network, or subnet. This may include not only devices such as servers, but also networking devices such as switches, and processing-capable components within these devices, such as NICs and SOCs, among other such options. Once the devices are discovered, attention of those devices can be requested 354 (or otherwise triggered or initiated) in order to determine trust across the network (or subnet). For each identified device, or at least those for which attestation is to be performed, at least one instance of evidence can be generated 356, along with evidence supporting the self-attestation. As mentioned, this may include information about a current state of a device. An endorsement can also be appended 358 to the evidence, such as where the evidence is signed using an endorsement from an authorized endorser, such as the manufacturer of the respective device. The evidence (with the endorsement) can then be caused 360 to be transmitted, via one or more network messages (and not over a communication bus in this example), to a respective verifier. Verification of the evidence can then be performed 362 for the individual devices by the respective verifier(s). Verification can be performed using additional information, such as expected state information, as well as an applicable security policy or other such input. A list of trusted devices and paths through the network (or subnet(s)) can be generated 364 based in part on the results of the various verifications. Certain requests can be allowed 366 to be routed through the network (or one or more subnets) using only trusted devices and paths. Further, untrusted devices can be prevented from accessing trusted networks or subnets, among other such actions discussed and suggested herein.

Approaches disclosed herein can also provide for in-network attestation reduction. Since, in at least one embodiment, an SM gathers all attestations of all connected devices, the SM can furthermore aggregate the connected devices to attest the network topology to a third party. A process such as swarm attestation can be applied with an SM serving as a trusted node on the path to the next layer of the network. Attesting large networks using such an approach, however, can be very compute intensive. Approaches in accordance with various embodiments can allow for attestation to be treated as an in-network management task. In this way, verifying the attestation can enjoy in-network compute paradigms, such as P4 and IB SHARP.

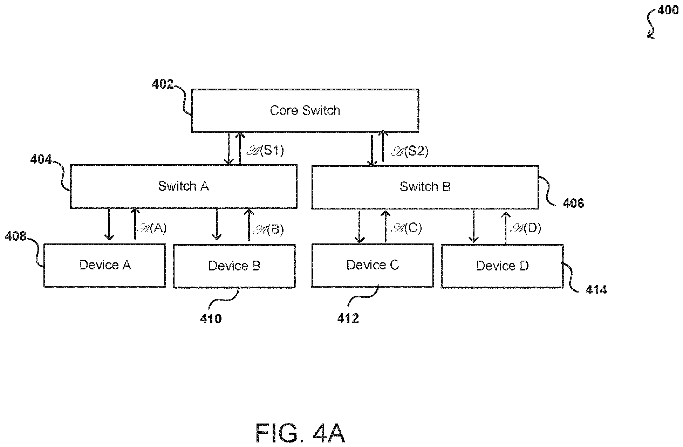

FIG. 4A illustrates an example subnet topology 400 in which attestation and other such processes can be performed as discussed herein. There are three levels to this example subnet topology 400, with a core switch 402 being at a highest level, a pair of network switches 404, 406 at an intermediate level, and a set of devices 408, 410, 412, 414 at a bottom level. A request received to the core switch 402 may be routed to a target device through a respective switch, where the device, switch, and/or path through the subnet may be based at least in part on which devices or paths through the subnet are trusted. In order to establish this trust, each device in the subnet can perform self-attestation, such as by sending attestation evidence for verification. In at least one embodiment, the core switch 402 can broadcast a general request for attestation that is to be performed by devices in the respective network or subnet.

Instead of having all devices send attestation messages all the way up to a top level, such as to the core switch 402 or an SM, devices at a given level can send attestation messages only to a corresponding device at a next-highest level of the subnet topology 400. For example, device A 408 and device B 410 can send attestation messages to switch A 404, which can function as a verifier for those devices 408, 410. Similarly, device C 412 and device D 414 can send attestation messages to switch B 406, which can function as a verifier for those devices 412, 414. Switch A and switch B can therefore have two roles, as a verifier for lower-level devices, and an attestor for themselves. Devices such as switches may have limited processing and/or memory capacity, and may thus choose to offload some of the processing, such as to a processor or server in communication with the switch, etc. Switch A 404 and switch B 406 can send attestation evidence for themselves to the core switch 402 of the subnet, which can verify the attestation evidence for switch A 404 and switch B 406. The attestation information sent to the core switch 402 from switch A 404 and switch B 406 can also include a list of trusted (and potentially untrusted) devices as verified by switch A 404 and switch B 406. The list of trusted devices does not need to include any of the evidence or other information used for the verification of those devices. In this way, the core switch 402 can generate a full list of trusted devices for the subnet topology 400, but will only receive evidence and have to perform verification for two devices, switch A 404 and switch B 406, which reduces an amount of data flow through the system as the evidence did not need to be propagated all the way to the core switch 402 (or SM, etc.). This can result in a significant reduction in traffic volume for large subnets with many different devices.

It should be understood, however, that such a process can be implemented in topologies that are not hierarchical, or where nodes of a given hierarchical level may also be connected to each other. For example, a subnet could be clustered into clusters or groups of devices, where a first cluster of devices sends attestation information to only a second cluster of devices, which then only sends attestation information to a third cluster of devices, rather than having all attestation information sent to a single manager component. In other embodiments, each device might be assigned a verifier such that each instance of evidence only need to be transmitted between two devices that are connected to each other, among other such options.

In at least one embodiment each verifier node can, as part of a verification process, validate the certificate chain and measurements of one or more corresponding child nodes. Measurement verification can involve a byte-to-byte comparison, which can be performed with a bitwise XOR or other such mechanism. Certificate chain verification in such a system can be twofold. First, a leaf certificate can be used to verify the measurements signature in attestation, where the verification can be performed with ALU and modulo operations. Second, a certificate chain can be verified with similar signature verification. Certificate revocation may not be able to be performed in place, however, and some existing in-network reduction schemes do not support the modulo operation. Thus, an approach in accordance with another embodiment can involve offloading the signature verifications and certificate revocation checks by the network controller.

In at least one embodiment, network verification can be parallelized and performed continuously with minimal power and/or performance overhead. Assuming a topology such as a Fat-Tree topology, for example, only the root of the tree should be verified by the network controller to attest the entire network in a scalable fashion. Such an approach allows runtime attestation of network devices to be performed periodically in the network to ensure only trustworthy devices are connected, as well as to enforce a security policy in a case where one or more untrustworthy devices are detected.

Being able to verify an entire network topology via attestations allows network administrators to gain a holistic understanding of a given network that is backed by cryptography. Such an approach can also help with administration, using existing tools for tasks such as visibility and diagnostics, and by logging attestation verification results into telemetry services. Network administrators can thereby gain visibility into the trust level of the network.

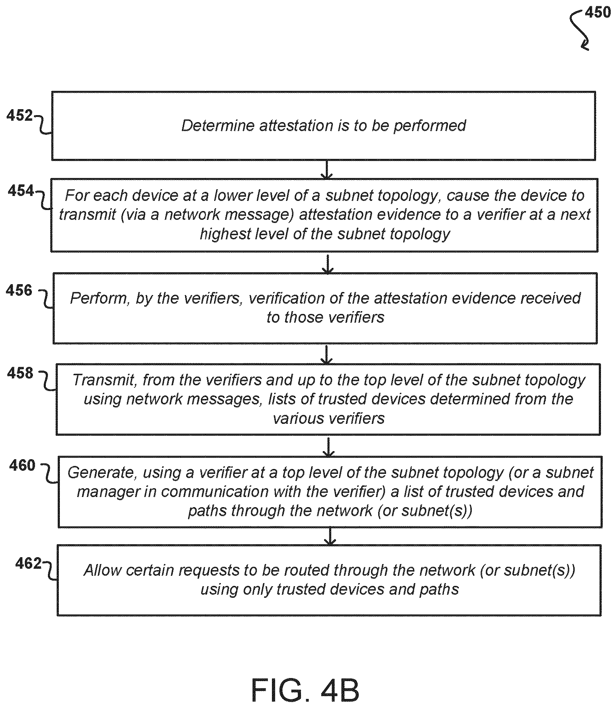

FIG. 4B illustrates an example process 450 that can be performed for reduced attestation of a network, or subnet, according to at least one embodiment. In this example, it is determined 452 that attestation is to be performed. This determination may correspond to an initial discovery process, a periodic security check, detection of a new device, or another such action, request, or trigger. In this example, attestation is to be performed for each device that is part of the relevant network or subnet. As mentioned, such a network can have a network topology that includes devices at various levels. For each device at a lower level of a subnet topology, the device can be caused 454 to transmit, using one or more network messages, attestation evidence, such as information about a state of the device signed by an endorsement. This evidence can be transmitted to a verifier at a next-highest level of the network topology. Each device can have one verifier, and each verifier may perform verification for one or more devices at a lower level. Each verifier can also provide its own attestation evidence to a respective verifier at a higher level. Verification can be performed 456 by the verifiers using at least this evidence, as well as potentially other information such as expected state or an applicable security policy. Lists of trusted devices, resulting from the verifications, can be transmitted 458 from the verifiers up to a subnet manager (or other top-level verifier) at a top level of the subnet topology, using one or more network messages. Devices that cannot attest themselves may be isolated in the network, or at least restricted from communicating with trusted devices or connected to a trusted subnet, etc., as may be determined by the applicable security policy. The lists of trusted devices do not need to include, or be associated with, any evidentiary information that was used to verify the trust in the listed devices. The top-level verifier can then generate 460 a master list of trusted devices and paths through the relevant network, or subnet, based in part upon the individual lists received from the lower-level verifiers. Certain requests can be allowed 462 to be routed through the network (or one or more subnets) using only trusted devices and paths. Further, untrusted devices can be prevented from accessing trusted networks or subnets, among other such actions discussed and suggested herein.

Such approaches can have additional benefits related to scalability, as well as sustainability. Attestation approaches discussed herein can scale to large networks, as well as dynamic networks where new devices can be added, existing devices removed, devices replaced with other devices, or additional processing devices added to existing devices, among other such changes or variations. As networks grow in size and complexity, having such a structured approach to attest the network can be beneficial for sustainability. There are also deployments where devices, such as network switches, may need to be brought into a trusted compute boundary, and such approaches allow for attestation to be performed automatically for those devices. In at least one embodiment, a locked routing table configuration can be attested through a form of trusted path routing in a scalable manner. In-network attestation can also work with existing network management tools, such as MADs for InfiniBand, as discussed in more detail elsewhere herein.

### DATA CENTER

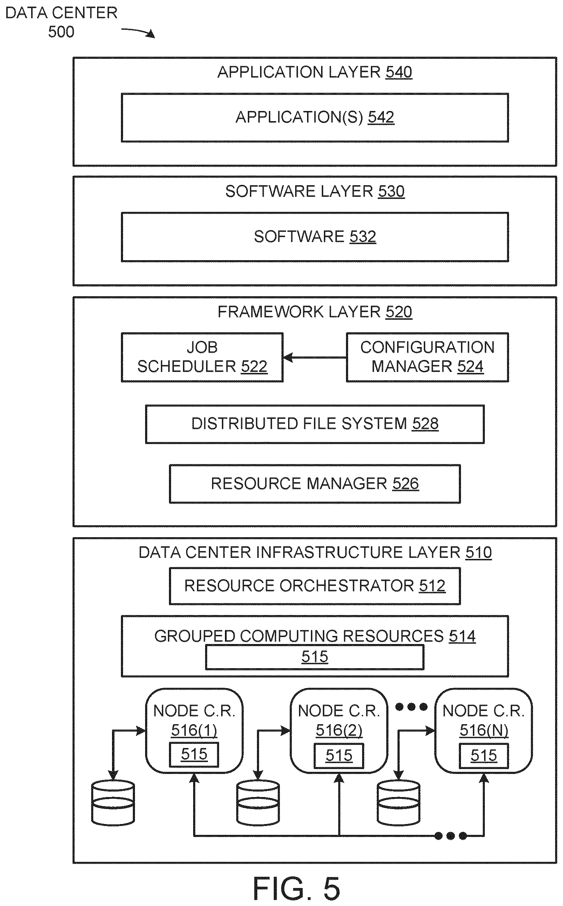

FIG. 5 illustrates an example data center 500, in which at least one embodiment may be used. In at least one embodiment, data center 500 includes a data center infrastructure layer 510, a framework layer 520, a software layer 530 and an application layer 540.

In at least one embodiment, as shown in FIG. 5, data center infrastructure layer 510 may include a resource orchestrator 512, grouped computing resources 514, and node computing resources ("node C.R.s") 516(1)-516(N), where "N" represents a positive integer (which may be a different integer "N" than used in other figures). In at least one embodiment, node C.R.s 516(1)-516(N) may include, but are not limited to, any number of central processing units ("CPUs") or other processors (including accelerators, field programmable gate arrays (FPGAs), graphics processors, etc.), memory storage devices 518(1)-518(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 516(1)-816(N) may be a server having one or more of above-mentioned computing resources.

In at least one embodiment, grouped computing resources 514 may include separate groupings of node C.R.s housed within one or more racks (not shown), or many racks housed in data centers at various geographical locations (also not shown). In at least one embodiment, separate groupings of node C.R.s within grouped computing resources 514 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 512 may configure or otherwise control one or more node C.R.s 516(1)-516(N) and/or grouped computing resources 514. In at least one embodiment, resource orchestrator 512 may include a software design infrastructure ("SDI") management entity for data center 500. In at least one embodiment, resource orchestrator 512 may include hardware, software or some combination thereof.

In at least one embodiment, as shown in FIG. 5, framework layer 520 includes a job scheduler 522, a configuration manager 524, a resource manager 526 and a distributed file system 528. In at least one embodiment, framework layer 520 may include a framework to support software 532 of software layer 530 and/or one or more application(s) 542 of application layer 540. In at least one embodiment, software 532 or application(s) 542 may respectively include web-based service software or applications, such as those provided by Amazon Web Services, Google Cloud and Microsoft Azure. In at least one embodiment, framework layer 520 may be, but is not limited to, a type of free and open-source software web application framework such as Apache Spark^{™} (hereinafter "Spark") that may utilize distributed file system 528 for large-scale data processing (e.g., "big data"). In at least one embodiment, job scheduler 522 may include a Spark driver to facilitate scheduling of workloads supported by various layers of data center 500. In at least one embodiment, configuration manager 524 may be capable of configuring different layers such as software layer 530 and framework layer 520 including Spark and distributed file system 528 for supporting large-scale data processing. In at least one embodiment, resource manager 526 may be capable of managing clustered or grouped computing resources mapped to or allocated for support of distributed file system 528 and job scheduler 522. In at least one embodiment, clustered or grouped computing resources may include grouped computing resources 514 at data center infrastructure layer 510. In at least one embodiment, resource manager 526 may coordinate with resource orchestrator 512 to manage these mapped or allocated computing resources.

In at least one embodiment, software 532 included in software layer 530 may include software used by at least portions of node C.R.s 516(1)-516(N), grouped computing resources 514, and/or distributed file system 528 of framework layer 520. In at least one embodiment, one or more types of software may include, but are not limited to, Internet web page search software, e-mail virus scan software, database software, and streaming video content software.

In at least one embodiment, application(s) 542 included in application layer 540 may include one or more types of applications used by at least portions of node C.R.s 516(1)-516(N), grouped computing resources 514, and/or distributed file system 528 of framework layer 520. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 524, resource manager 526, and resource orchestrator 512 may implement any number and type of self-modifying actions based on any amount and type of data acquired in any technically feasible fashion. In at least one embodiment, self-modifying actions may relieve a data center operator of data center 500 from making possibly bad configuration decisions and possibly avoiding underutilized and/or poor performing portions of a data center.

In at least one embodiment, data center 500 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 500. In at least one embodiment, trained machine learning models corresponding to one or more neural networks may be used to infer or predict information using resources described above with respect to data center 500 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 515 are used to perform inferencing and/or training operations associated with one or more embodiments. In at least one embodiment, inference and/or training logic 515 may be used in system FIG. 5 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

### COMPUTER SYSTEMS

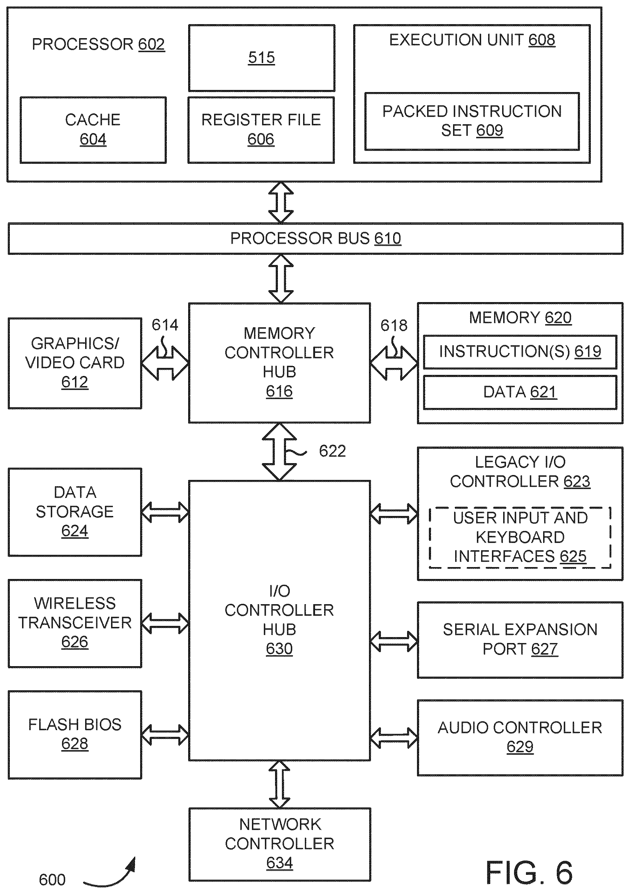

FIG. 6 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 600 may include, without limitation, a component, such as a processor 602 to employ execution units including logic to perform algorithms for process data, in accordance with present disclosure, such as in embodiment described herein. In at least one embodiment, computer system 600 may include processors, such as PENTIUM^{®} Processor family, Xeon^{™}, Itanium^{®}, Scale^{™} and/or StrongARM^{™}, Intel^{®} Core^{™}, or Intel^{®} Nirvana^{™} microprocessors available from Intel Corporation of Santa Clara, California, although other systems (including PCs having other microprocessors, engineering workstations, set-top boxes and like) may also be used. In at least one embodiment, computer system 600 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("Necks"), set-top boxes, network hubs, wide area network ("WAN") switches, or any other system that may perform one or more instructions in accordance with at least one embodiment.

In at least one embodiment, computer system 600 may include, without limitation, processor 602 that may include, without limitation, one or more execution units 608 to perform machine learning model training and/or inferencing according to techniques described herein. In at least one embodiment, computer system 600 is a single processor desktop or server system, but in another embodiment, computer system 600 may be a multiprocessor system. In at least one embodiment, processor 602 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 602 may be coupled to a processor bus 610 that may transmit data signals between processor 602 and other components in computer system 600.

In at least one embodiment, processor 602 may include, without limitation, a Level 1 ("L1") internal cache memory ("cache") 604. In at least one embodiment, processor 602 may have a single internal cache or multiple levels of internal cache. In at least one embodiment, cache memory may reside external to processor 602. Other embodiments may also include a combination of both internal and external caches depending on particular implementation and needs. In at least one embodiment, a register file 606 may store different types of data in various registers including, without limitation, integer registers, floating point registers, status registers, and an instruction pointer register.

In at least one embodiment, execution unit 608, including, without limitation, logic to perform integer and floating point operations, also resides in processor 602. In at least one embodiment, processor 602 may also include a microcode ("code") read only memory ("ROM") that stores microcode for certain macro instructions. In at least one embodiment, execution unit 608 may include logic to handle a packed instruction set 609. In at least one embodiment, by including packed instruction set 609 in an instruction set of a general-purpose processor, along with associated circuitry to execute instructions, operations used by many multimedia applications may be performed using packed data in processor 602. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 608 may also be used in microcontrollers, embedded processors, graphics devices, DSPs, and other types of logic circuits. In at least one embodiment, computer system 600 may include, without limitation, a memory 620. In at least one embodiment, memory 620 may be a Dynamic Random Access Memory ("DRAM") device, a Static Random Access Memory ("SRAM") device, a flash memory device, or another memory device. In at least one embodiment, memory 620 may store instruction(s) 619 and/or data 621 represented by data signals that may be executed by processor 602.

In at least one embodiment, a system logic chip may be coupled to processor bus 610 and memory 620. In at least one embodiment, a system logic chip may include, without limitation, a memory controller hub ("MCH") 616, and processor 602 may communicate with MCH 616 via processor bus 610. In at least one embodiment, MCH 616 may provide a high bandwidth memory path 618 to memory 620 for instruction and data storage and for storage of graphics commands, data, and textures. In at least one embodiment, MCH 616 may direct data signals between processor 602, memory 620, and other components in computer system 600 and to bridge data signals between processor bus 610, memory 620, and a system I/O interface 622. In at least one embodiment, a system logic chip may provide a graphics port for coupling to a graphics controller. In at least one embodiment, MCH 616 may be coupled to memory 620 through high bandwidth memory path 618 and a graphics/video card 612 may be coupled to MCH 616 through an Accelerated Graphics Port ("AGP") interconnect 614.

In at least one embodiment, computer system 600 may use system I/O interface 622 as a proprietary hub interface bus to couple MCH 616 to an I/O controller hub ("ICH") 630. In at least one embodiment, ICH 630 may provide direct connections to some I/O devices via a local I/O bus. In at least one embodiment, a local I/O bus may include, without limitation, a high-speed I/O bus for connecting peripherals to memory 620, a chipset, and processor 602. Examples may include, without limitation, an audio controller 629, a firmware hub ("flash BIOS") 628, a wireless transceiver 626, a data storage 624, a legacy I/O controller 623 containing user input and keyboard interfaces 625, a serial expansion port 627, such as a Universal Serial Bus ("USB") port, and a network controller 634. In at least one embodiment, data storage 624 may comprise a hard disk drive, a floppy disk drive, a CD-ROM device, a flash memory device, or other mass storage device.

In at least one embodiment, FIG. 6 illustrates a system, which includes interconnected hardware devices or "chips", whereas in other embodiments, FIG. 6 may illustrate an exemplary SoC In at least one embodiment, devices illustrated in FIG. 6 may be interconnected with proprietary interconnects, standardized interconnects (e.g., PCIe) or some combination thereof. In at least one embodiment, one or more components of computer system 600 are interconnected using compute express link (CXL) interconnects.

Inference and/or training logic 515 are used to perform inferencing and/or training operations associated with one or more embodiments. In at least one embodiment, inference and/or training logic 515 may be used in system FIG. 6 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

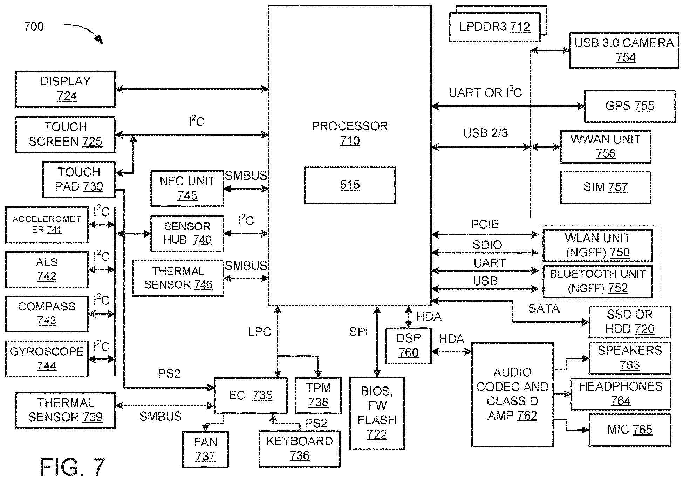

FIG. 7 is a block diagram illustrating an electronic device 700 for utilizing a processor 710, according to at least one embodiment. In at least one embodiment, electronic device 700 may be, for example and without limitation, a notebook, a tower server, a rack server, a blade server, a laptop, a desktop, a tablet, a mobile device, a phone, an embedded computer, or any other suitable electronic device.

In at least one embodiment, electronic device 700 may include, without limitation, processor 710 communicatively coupled to any suitable number or kind of components, peripherals, modules, or devices. In at least one embodiment, processor 710 is coupled using a bus or interface, such as a I²C bus, a System Management Bus ("Sambas"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3, etc.), or a Universal Asynchronous Receiver/Transmitter ("UART") bus. In at least one embodiment, FIG. 7 illustrates a system, which includes interconnected hardware devices or "chips", whereas in other embodiments, FIG. 7 may illustrate an exemplary SoC. In at least one embodiment, devices illustrated in FIG. 7 may be interconnected with proprietary interconnects, standardized interconnects (e.g., PCIe) or some combination thereof. In at least one embodiment, one or more components of FIG. 7 are interconnected using compute express link (CXL) interconnects.

In at least one embodiment, FIG 7 may include a display 724, a touch screen 725, a touch pad 730, a Near Field Communications unit ("NFC") 745, a sensor hub 740, a thermal sensor 746, an Express Chipset ("EC") 735, a Trusted Platform Module ("TPM") 738, BIOS/firmware/flash memory ("BIOS, FW Flash") 722, a DSP 760, a drive 720 such as a Solid State Disk ("SSD") or a Hard Disk Drive ("HDD"), a wireless local area network unit ("WLAN") 750, a Bluetooth unit 752, a Wireless Wide Area Network unit ("WWAN") 756, a Global Positioning System (GPS) unit 755, a camera ("USB 3.0 camera") 754 such as a USB 3.0 camera, and/or a Low Power Double Data Rate ("LPDDR") memory unit ("LPDDR3") 715 implemented in, for example, an LPDDR3 standard. These components may each be implemented in any suitable manner.

In at least one embodiment, other components may be communicatively coupled to processor 710 through components described herein. In at least one embodiment, an accelerometer 741, an ambient light sensor ("ALS") 742, a compass 743, and a gyroscope 744 may be communicatively coupled to sensor hub 740. In at least one embodiment, a thermal sensor 739, a fan 737, a keyboard 736, and touch pad 730 may be communicatively coupled to EC 735. In at least one embodiment, speakers 763, headphones 764, and a microphone ("mic") 765 may be communicatively coupled to an audio unit ("audio codec and class D amp") 762, which may in turn be communicatively coupled to DSP 760. In at least one embodiment, audio unit 762 may include, for example and without limitation, an audio coder/decoder ("codec") and a class D amplifier. In at least one embodiment, a SIM card ("SIM") 757 may be communicatively coupled to WWAN unit 756. In at least one embodiment, components such as WLAN unit 750 and Bluetooth unit 752, as well as WWAN unit 756 may be implemented in a Next Generation Form Factor ("NGFF").

Inference and/or training logic 515 are used to perform inferencing and/or training operations associated with one or more embodiments. In at least one embodiment, inference and/or training logic 515 may be used in system FIG. 7 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

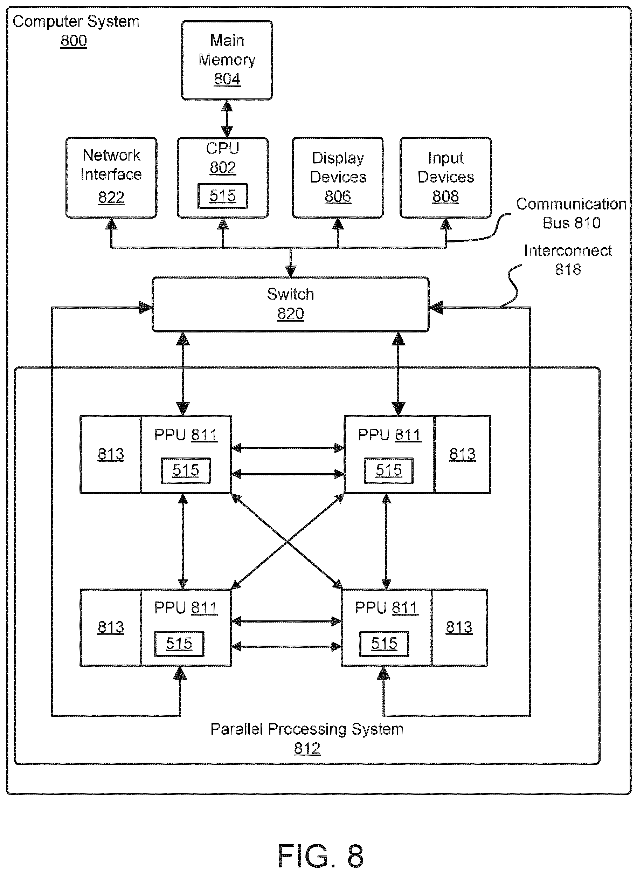

FIG. 8 illustrates a computer system 800, according to at least one embodiment. In at least one embodiment, computer system 800 is configured to implement various processes and methods described throughout this disclosure.

In at least one embodiment, computer system 800 comprises, without limitation, at least one central processing unit ("CPU") 802 that is connected to a communication bus 810 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 800 includes, without limitation, a main memory 804 and control logic (e.g., implemented as hardware, software, or a combination thereof) and data are stored in main memory 804, which may take form of random access memory ("RAM"). In at least one embodiment, a network interface subsystem ("network interface") 822 provides an interface to other computing devices and networks for receiving data from and transmitting data to other systems with computer system 800.

In at least one embodiment, computer system 800, in at least one embodiment, includes, without limitation, input devices 808, a parallel processing system 812, and display devices 806 that can be implemented using a conventional cathode ray tube ("CRT"), a liquid crystal display ("LCD"), a light emitting diode ("LED") display, a plasma display, or other suitable display technologies. In at least one embodiment, user input is received from input devices 808 such as keyboard, mouse, touchpad, microphone, etc. In at least one embodiment, each module described herein can be situated on a single semiconductor platform to form a processing system.

Inference and/or training logic 515 are used to perform inferencing and/or training operations associated with one or more embodiments. In at least one embodiment, inference and/or training logic 515 may be used in system FIG. 8 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

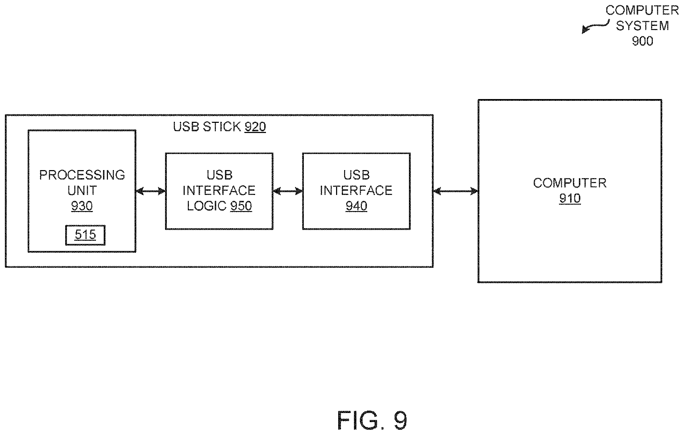

FIG. 9 illustrates a computer system 900, according to at least one embodiment. In at least one embodiment, computer system 900 includes, without limitation, a computer 910 and a USB stick 920. In at least one embodiment, computer 910 may include, without limitation, any number and type of processor(s) (not shown) and a memory (not shown). In at least one embodiment, computer 910 includes, without limitation, a server, a cloud instance, a laptop, and a desktop computer.

In at least one embodiment, USB stick 920 includes, without limitation, a processing unit 930, a USB interface 940, and USB interface logic 950. In at least one embodiment, processing unit 930 may be any instruction execution system, apparatus, or device capable of executing instructions. In at least one embodiment, processing unit 930 may include, without limitation, any number and type of processing cores (not shown). In at least one embodiment, processing unit 930 comprises an application specific integrated circuit ("ASIC") that is optimized to perform any amount and type of operations associated with machine learning. For instance, in at least one embodiment, processing unit 930 is a tensor processing unit ("TPC") that is optimized to perform machine learning inference operations. In at least one embodiment, processing unit 930 is a vision processing unit ("VPU") that is optimized to perform machine vision and machine learning inference operations.

In at least one embodiment, USB interface 940 may be any type of USB connector or USB socket. For instance, in at least one embodiment, USB interface 940 is a USB 3.0 Type-C socket for data and power. In at least one embodiment, USB interface 940 is a USB 3.0 Type-A connector. In at least one embodiment, USB interface logic 950 may include any amount and type of logic that enables processing unit 930 to interface with devices (e.g., computer 910) via USB connector 940.

Inference and/or training logic 515 are used to perform inferencing and/or training operations associated with one or more embodiments. In at least one embodiment, inference and/or training logic 515 may be used in system FIG. 9 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

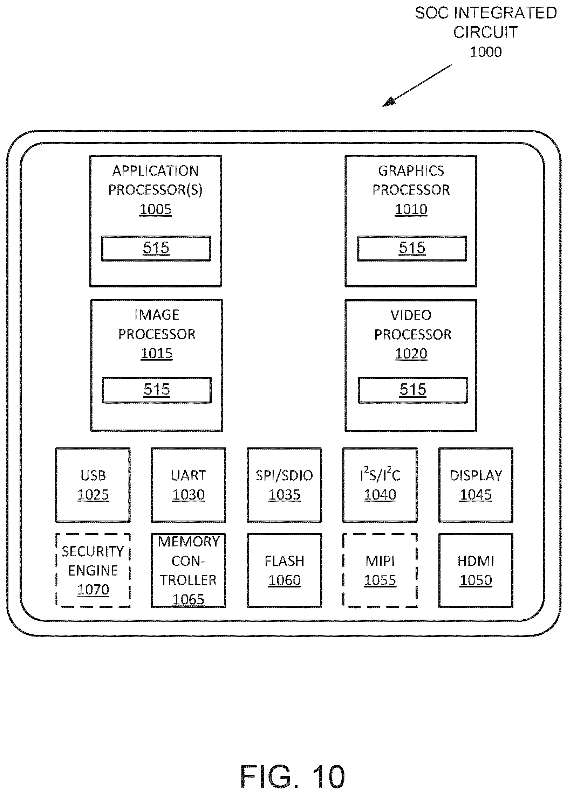

FIG. 10 illustrates exemplary integrated circuits and associated graphics processors that may be fabricated using one or more IP cores, according to various embodiments described herein. In addition to what is illustrated, other logic and circuits may be included in at least one embodiment, including additional graphics processors/cores, peripheral interface controllers, or general-purpose processor cores.

FIG. 10 is a block diagram illustrating an exemplary system-on-a-chip (SOC) integrated circuit 1000 that may be fabricated using one or more IP cores, according to at least one embodiment. In at least one embodiment, SOC integrated circuit 1000 includes one or more application processor(s) 1005 (e.g., CPUs), at least one graphics processor 1010, and may additionally include an image processor 1015 and/or a video processor 1020, any of which may be a modular IP core. In at least one embodiment, SOC integrated circuit 1000 includes peripheral or bus logic including a USB controller 1025, a UART controller 1030, an SPI/SDIO controller 1035, and an I²2S/I²2C controller 1040. In at least one embodiment, SOC integrated circuit 1000 can include a display device 1045 coupled to one or more of a high-definition multimedia interface (HDMI) controller 1050 and a mobile industry processor interface (MIPI) display interface 1055. In at least one embodiment, storage may be provided by a flash memory subsystem 1060 including flash memory and a flash memory controller. In at least one embodiment, a memory interface may be provided via a memory controller 1065 for access to SDRAM or SRAM memory devices. In at least one embodiment, some integrated circuits additionally include an embedded security engine 1070.

Inference and/or training logic 515 are used to perform inferencing and/or training operations associated with one or more embodiments. In at least one embodiment, inference and/or training logic 515 may be used in SOC integrated circuit 1000 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

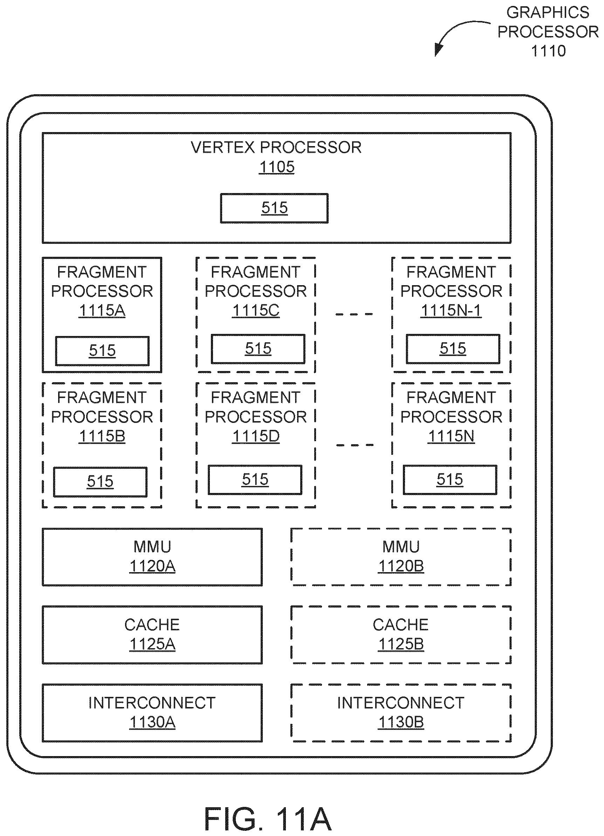

FIGS. 11A-11B illustrate exemplary integrated circuits and associated graphics processors that may be fabricated using one or more IP cores, according to various embodiments described herein. In addition to what is illustrated, other logic and circuits may be included in at least one embodiment, including additional graphics processors/cores, peripheral interface controllers, or general-purpose processor cores.

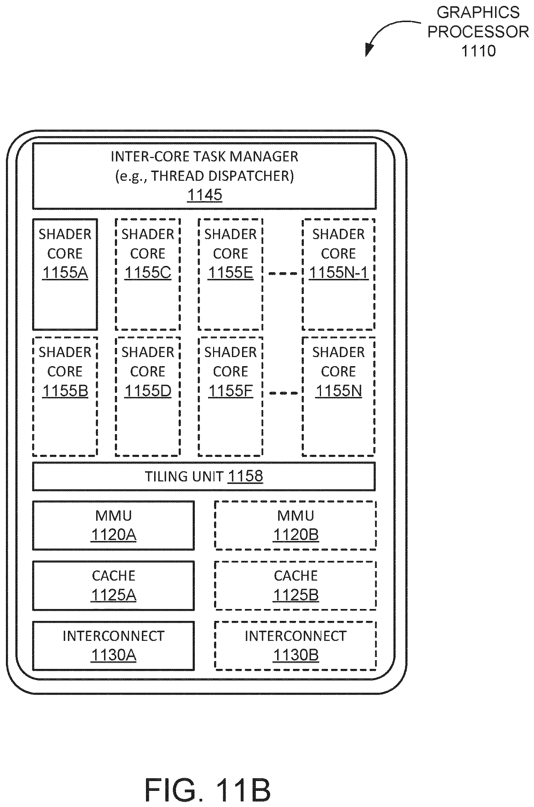

FIGS. 11A-11B are block diagrams illustrating exemplary graphics processors for use within an SoC, according to embodiments described herein. FIG. 11A illustrates an exemplary graphics processor 1110 of a system on a chip integrated circuit that may be fabricated using one or more IP cores, according to at least one embodiment. FIG. 11B illustrates an additional exemplary graphics processor 1140 of a system on a chip integrated circuit that may be fabricated using one or more IP cores, according to at least one embodiment. In at least one embodiment, graphics processor 1110 of FIG. 11A is a low power graphics processor core. In at least one embodiment, graphics processor 1140 of FIG. 11B is a higher performance graphics processor core. In at least one embodiment, each of graphics processors 1110, 1140 can be variants of computer system 900 of FIG. 9.

In at least one embodiment, graphics processor 1110 includes a vertex processor 1105 and one or more fragment processor(s) 1115A-1115N (e.g., 1115A, 1115B, 1115C, 1115D, through 1115N-1, and 1115N). In at least one embodiment, graphics processor 1110 can execute different shader programs via separate logic, such that vertex processor 1105 is optimized to execute operations for vertex shader programs, while one or more fragment processor(s) 1115A-1115N execute fragment (e.g., pixel) shading operations for fragment or pixel shader programs. In at least one embodiment, vertex processor 1105 performs a vertex processing stage of a 3D graphics pipeline and generates primitives and vertex data. In at least one embodiment, fragment processor(s) 1115A-1115N use primitive and vertex data generated by vertex processor 1105 to produce a framebuffer that is displayed on a display device. In at least one embodiment, fragment processor(s) 1115A-1115N are optimized to execute fragment shader programs as provided for in an OpenGL API, which may be used to perform similar operations as a pixel shader program as provided for in a Direct 3D API.

In at least one embodiment, graphics processor 1110 additionally includes one or more memory management units (MMUs) 1120A-1120B, cache(s) 1125A-1125B, and circuit interconnect(s) 1130A-1130B. In at least one embodiment, one or more MMU(s) 1120A-1120B provide for virtual to physical address mapping for graphics processor 1110, including for vertex processor 1105 and/or fragment processor(s) 1115A-1115N, which may reference vertex or image/texture data stored in memory, in addition to vertex or image/texture data stored in one or more cache(s) 1125A-1125B. In at least one embodiment, one or more MMU(s) 1120A-1120B may be synchronized with other MMUs within a system, including one or more MMUs associated with one or more application processor(s) 1105, image processors 1115, and/or video processors 1120 of FIG. 11A, such that each processor 1105-1120 can participate in a shared or unified virtual memory system. In at least one embodiment, one or more circuit interconnect(s) 1130A-1130B enable graphics processor 1110 to interface with other IP cores within SoC, either via an internal bus of SoC or via a direct connection.

In at least one embodiment, graphics processor 1140 includes one or more shader core(s) 1155A-1155N (e.g., 1155A, 1155B, 1155C, 1155D, 1155E, 1155F, through 1155N-1, and 1155N) as shown in FIG. 11B, which provides for a unified shader core architecture in which a single core or type or core can execute all types of programmable shader code, including shader program code to implement vertex shaders, fragment shaders, and/or compute shaders. In at least one embodiment, a number of shader cores can vary. In at least one embodiment, graphics processor 1140 includes an inter-core task manager 1145, which acts as a thread dispatcher to dispatch execution threads to one or more shader cores 1155A-1155N and a tiling unit 1158 to accelerate tiling operations for tile-based rendering, in which rendering operations for a scene are subdivided in image space, for example to exploit local spatial coherence within a scene or to optimize use of internal caches.

Embodiments presented herein can perform attestation for an entire network topology, and can restrict a flow of data or traffic through only trusted paths through trusted devices.

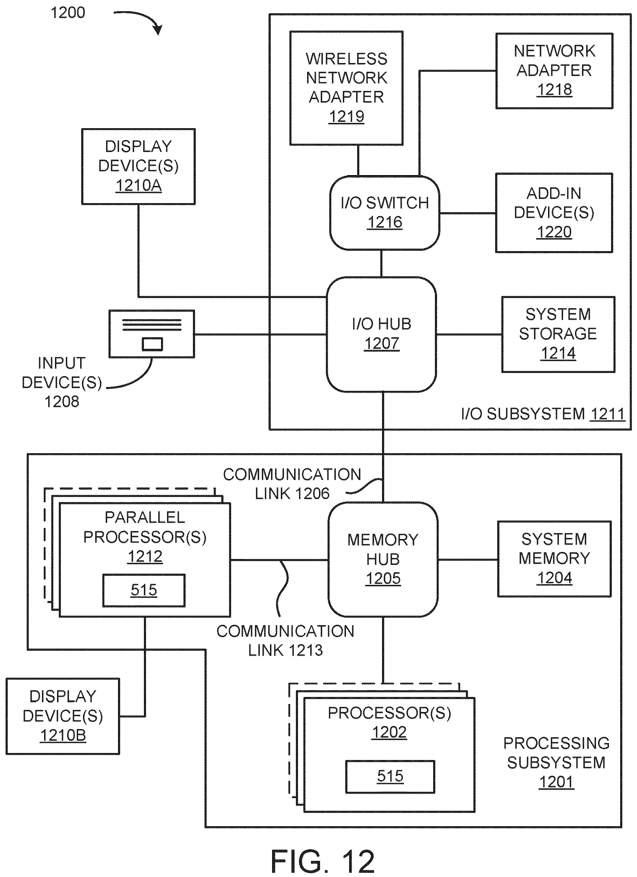

FIG. 12 is a block diagram illustrating a computing system 1200 according to at least one embodiment. In at least one embodiment, computing system 1200 includes a processing subsystem 1201 having one or more processor(s) 1202 and a system memory 1204 communicating via an interconnection path that may include a memory hub 1205. In at least one embodiment, memory hub 1205 may be a separate component within a chipset component or may be integrated within one or more processor(s) 1202. In at least one embodiment, memory hub 1205 couples with an I/O subsystem 1211 via a communication link 1206. In at least one embodiment, I/O subsystem 1211 includes an I/O hub 1207 that can enable computing system 1200 to receive input from one or more input device(s) 1208. In at least one embodiment, I/O hub 1207 can enable a display controller, which may be included in one or more processor(s) 1202, to provide outputs to one or more display device(s) 1210A. In at least one embodiment, one or more display device(s) 1210A coupled with I/O hub 1207 can include a local, internal, or embedded display device.

In at least one embodiment, processing subsystem 1201 includes one or more parallel processor(s) 1212 coupled to memory hub 1205 via a bus or other communication link 1213. In at least one embodiment, communication link 1213 may use one of any number of standards based communication link technologies or protocols, such as but not limited to PCI Express, or may be a vendor-specific communications interface or communications fabric. In at least one embodiment, one or more parallel processor(s) 1212 form a computationally focused parallel or vector processing system that can include a large number of processing cores and/or processing clusters, such as a many-integrated core (MIC) processor. In at least one embodiment, some or all of parallel processor(s) 1212 form a graphics processing subsystem that can output pixels to one of one or more display device(s) 1210A coupled via I/O hub 1207. In at least one embodiment, parallel processor(s) 1212 can also include a display controller and display interface (not shown) to enable a direct connection to one or more display device(s) 1210B. In at least one embodiment, parallel processor(s) 1212 include one or more cores, such as graphics cores 1200 discussed herein.

In at least one embodiment, a system storage unit 1214 can connect to I/O hub 1207 to provide a storage mechanism for computing system 1200. In at least one embodiment, an I/O switch 1216 can be used to provide an interface mechanism to enable connections between I/O hub 1207 and other components, such as a network adapter 1218 and/or a wireless network adapter 1219 that may be integrated into platform, and various other devices that can be added via one or more add-in device(s) 1220. In at least one embodiment, network adapter 1218 can be an Ethernet adapter or another wired network adapter. In at least one embodiment, wireless network adapter 1219 can include one or more of a Wi-Fi, Bluetooth, near field communication (NFC), or other network device that includes one or more wireless radios.

In at least one embodiment, computing system 1200 can include other components not explicitly shown, including USB or other port connections, optical storage drives, video capture devices, and like, may also be connected to I/O hub 1207. In at least one embodiment, communication paths interconnecting various components in FIG. 12 may be implemented using any suitable protocols, such as PCI (Peripheral Component Interconnect) based protocols (e.g., PCI-Express), or other bus or point-to-point communication interfaces and/or protocol(s), such as NV-Link high-speed interconnect, or interconnect protocols.

In at least one embodiment, parallel processor(s) 1212 incorporate circuitry optimized for graphics and video processing, including, for example, video output circuitry, and constitutes a graphics processing unit (GPU), e.g., parallel processor(s) 1212 includes graphics core 1200. In at least one embodiment, parallel processor(s) 1212 incorporate circuitry optimized for general purpose processing. In at least embodiment, components of computing system 1200 may be integrated with one or more other system elements on a single integrated circuit. For example, in at least one embodiment, parallel processor(s) 1212, memory hub 1205, processor(s) 1202, and I/O hub 1207 can be integrated into a system on chip (SoC) integrated circuit. In at least one embodiment, components of computing system 1200 can be integrated into a single package to form a system in package (SIP) configuration. In at least one embodiment, at least a portion of components of computing system 1200 can be integrated into a multi-chip module (MCM), which can be interconnected with other multi-chip modules into a modular computing system.

Inference and/or training logic 515 are used to perform inferencing and/or training operations associated with one or more embodiments. In at least one embodiment, inference and/or training logic 515 may be used in system FIG. 12 for inferencing or predicting operations based, at least in part, on weight parameters calculated using neural network training operations, neural network functions and/or architectures, or neural network use cases described herein.

Embodiments presented herein can perform attestation for an entire network topology, and can restrict a flow of data or traffic through only trusted paths through trusted devices.

### PROCESSORS

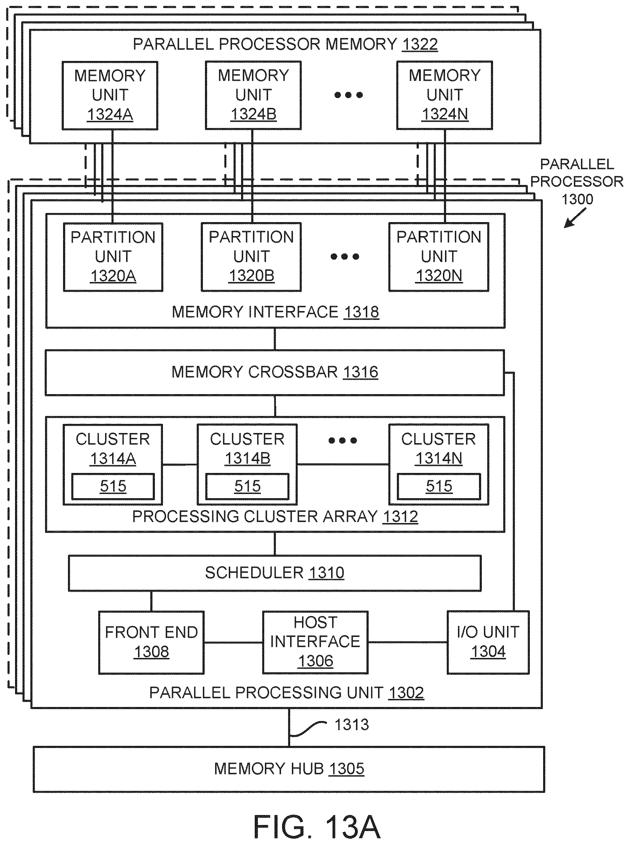

FIG. 13A illustrates a parallel processor 1300 according to at least one embodiment. In at least one embodiment, various components of parallel processor 1300 may be implemented using one or more integrated circuit devices, such as programmable processors, application specific integrated circuits (ASICs), or field programmable gate arrays (FPGA). In at least one embodiment, illustrated parallel processor 1300 is a variant of one or more parallel processor(s) 1212 shown in FIG. 12 according to an exemplary embodiment. In at least one embodiment, a parallel processor 1300 includes one or more graphics cores 1200.

In at least one embodiment, parallel processor 1300 includes a parallel processing unit 1302. In at least one embodiment, parallel processing unit 1302 includes an I/O unit 1304 that enables communication with other devices, including other instances of parallel processing unit 1302. In at least one embodiment, I/O unit 1304 may be directly connected to other devices. In at least one embodiment, I/O unit 1304 connects with other devices via use of a hub or switch interface, such as a memory hub 1305. In at least one embodiment, connections between memory hub 1305 and I/O unit 1304 form a communication link 1313. In at least one embodiment, I/O unit 1304 connects with a host interface 1306 and a memory crossbar 1316, where host interface 1306 receives commands directed to performing processing operations and memory crossbar 1316 receives commands directed to performing memory operations.

In at least one embodiment, when host interface 1306 receives a command buffer via I/O unit 1304, host interface 1306 can direct work operations to perform those commands to a front end 1308. In at least one embodiment, front end 1308 couples with a scheduler 1310 (which may be referred to as a sequencer), which is configured to distribute commands or other work items to a processing cluster array 1312. In at least one embodiment, scheduler 1310 ensures that processing cluster array 1312 is properly configured and in a valid state before tasks are distributed to a cluster of processing cluster array 1312. In at least one embodiment, scheduler 1310 is implemented via firmware logic executing on a microcontroller. In at least one embodiment, microcontroller implemented scheduler 1310 is configurable to perform complex scheduling and work distribution operations at coarse and fine granularity, enabling rapid preemption and context switching of threads executing on processing array 1312. In at least one embodiment, host software can prove workloads for scheduling on processing cluster array 1312 via one of multiple graphics processing paths. In at least one embodiment, workloads can then be automatically distributed across processing array cluster 1312 by scheduler 1310 logic within a microcontroller including scheduler 1310.

In at least one embodiment, processing cluster array 1312 can include up to "N" processing clusters (e.g., cluster 1314A, cluster 1314B, through cluster 1314N), where "N" represents a positive integer (which may be a different integer "N" than used in other figures). In at least one embodiment, each cluster 1314A-1314N of processing cluster array 1312 can execute a large number of concurrent threads. In at least one embodiment, scheduler 1310 can allocate work to clusters 1314A-1314N of processing cluster array 1312 using various scheduling and/or work distribution algorithms, which may vary depending on workload arising for each type of program or computation. In at least one embodiment, scheduling can be handled dynamically by scheduler 1310, or can be assisted in part by compiler logic during compilation of program logic configured for execution by processing cluster array 1312. In at least one embodiment, different clusters 1314A-1314N of processing cluster array 1312 can be allocated for processing different types of programs or for performing different types of computations.

In at least one embodiment, processing cluster array 1312 can be configured to perform various types of parallel processing operations. In at least one embodiment, processing cluster array 1312 is configured to perform general-purpose parallel compute operations. For example, in at least one embodiment, processing cluster array 1312 can include logic to execute processing tasks including filtering of video and/or audio data, performing modeling operations, including physics operations, and performing data transformations.

In at least one embodiment, processing cluster array 1312 is configured to perform parallel graphics processing operations. In at least one embodiment, processing cluster array 1312 can include additional logic to support execution of such graphics processing operations, including but not limited to, texture sampling logic to perform texture operations, as well as tessellation logic and other vertex processing logic. In at least one embodiment, processing cluster array 1312 can be configured to execute graphics processing related shader programs such as but not limited to, vertex shaders, tessellation shaders, geometry shaders, and pixel shaders. In at least one embodiment, parallel processing unit 1302 can transfer data from system memory via I/O unit 1304 for processing. In at least one embodiment, during processing, transferred data can be stored to on-chip memory (e.g., parallel processor memory 1322) during processing, then written back to system memory.

In at least one embodiment, when parallel processing unit 1302 is used to perform graphics processing, scheduler 1310 can be configured to divide a processing workload into approximately equal sized tasks, to better enable distribution of graphics processing operations to multiple clusters 1314A-1314N of processing cluster array 1312. In at least one embodiment, portions of processing cluster array 1312 can be configured to perform different types of processing. For example, in at least one embodiment, a first portion may be configured to perform vertex shading and topology generation, a second portion may be configured to perform tessellation and geometry shading, and a third portion may be configured to perform pixel shading or other screen space operations, to produce a rendered image for display. In at least one embodiment, intermediate data produced by one or more of clusters 1314A-1314N may be stored in buffers to allow intermediate data to be transmitted between clusters 1314A-1314N for further processing.

In at least one embodiment, processing cluster array 1312 can receive processing tasks to be executed via scheduler 1310, which receives commands defining processing tasks from front end 1308. In at least one embodiment, processing tasks can include indices of data to be processed, e.g., surface (patch) data, primitive data, vertex data, and/or pixel data, as well as state parameters and commands defining how data is to be processed (e.g., what program is to be executed). In at least one embodiment, scheduler 1310 may be configured to fetch indices corresponding to tasks or may receive indices from front end 1308. In at least one embodiment, front end 1308 can be configured to ensure processing cluster array 1312 is configured to a valid state before a workload specified by incoming command buffers (e.g., batch-buffers, push buffers, etc.) is initiated.

In at least one embodiment, each of one or more instances of parallel processing unit 1302 can couple with a parallel processor memory 1322. In at least one embodiment, parallel processor memory 1322 can be accessed via memory crossbar 1316, which can receive memory requests from processing cluster array 1312 as well as I/O unit 1304. In at least one embodiment, memory crossbar 1316 can access parallel processor memory 1322 via a memory interface 1318. In at least one embodiment, memory interface 1318 can include multiple partition units (e.g., partition unit 1320A, partition unit 1320B, through partition unit 1320N) that can each couple to a portion (e.g., memory unit) of parallel processor memory 1322. In at least one embodiment, a number of partition units 1320A-1320N is configured to be equal to a number of memory units, such that a first partition unit 1320A has a corresponding first memory unit 1324A, a second partition unit 1320B has a corresponding memory unit 1324B, and an N-th partition unit 1320N has a corresponding N-th memory unit 1324N. In at least one embodiment, a number of partition units 1320A-1320N may not be equal to a number of memory units.

In at least one embodiment, memory units 1324A-1324N can include various types of memory devices, including dynamic random access memory (DRAM) or graphics random access memory, such as synchronous graphics random access memory (SGRAM), including graphics double data rate (GDDR) memory. In at least one embodiment, memory units 1324A-1324N may also include 3D stacked memory, including but not limited to high bandwidth memory (HBM), HBM2e, or HDM3. In at least one embodiment, render targets, such as frame buffers or texture maps may be stored across memory units 1324A-1324N, allowing partition units 1320A-1320N to write portions of each render target in parallel to efficiently use available bandwidth of parallel processor memory 1322. In at least one embodiment, a local instance of parallel processor memory 1322 may be excluded in favor of a unified memory design that utilizes system memory in conjunction with local cache memory.

In at least one embodiment, any one of clusters 1314A-1314N of processing cluster array 1312 can process data that will be written to any of memory units 1324A-1324N within parallel processor memory 1322. In at least one embodiment, memory crossbar 1316 can be configured to transfer an output of each cluster 1314A-1314N to any partition unit 1320A-1320N or to another cluster 1314A-1314N, which can perform additional processing operations on an output. In at least one embodiment, each cluster 1314A-1314N can communicate with memory interface 1318 through memory crossbar 1316 to read from or write to various external memory devices. In at least one embodiment, memory crossbar 1316 has a connection to memory interface 1318 to communicate with I/O unit 1304, as well as a connection to a local instance of parallel processor memory 1322, enabling processing units within different processing clusters 1314A-1314N to communicate with system memory or other memory that is not local to parallel processing unit 1302. In at least one embodiment, memory crossbar 1316 can use virtual channels to separate traffic streams between clusters 1314A-1314N and partition units 1320A-1320N.

In at least one embodiment, multiple instances of parallel processing unit 1302 can be provided on a single add-in card, or multiple add-in cards can be interconnected. In at least one embodiment, different instances of parallel processing unit 1302 can be configured to interoperate even if different instances have different numbers of processing cores, different amounts of local parallel processor memory, and/or other configuration differences. For example, in at least one embodiment, some instances of parallel processing unit 1302 can include higher precision floating point units relative to other instances. In at least one embodiment, systems incorporating one or more instances of parallel processing unit 1302 or parallel processor 1300 can be implemented in a variety of configurations and form factors, including but not limited to desktop, laptop, or handheld personal computers, servers, workstations, game consoles, and/or embedded systems.

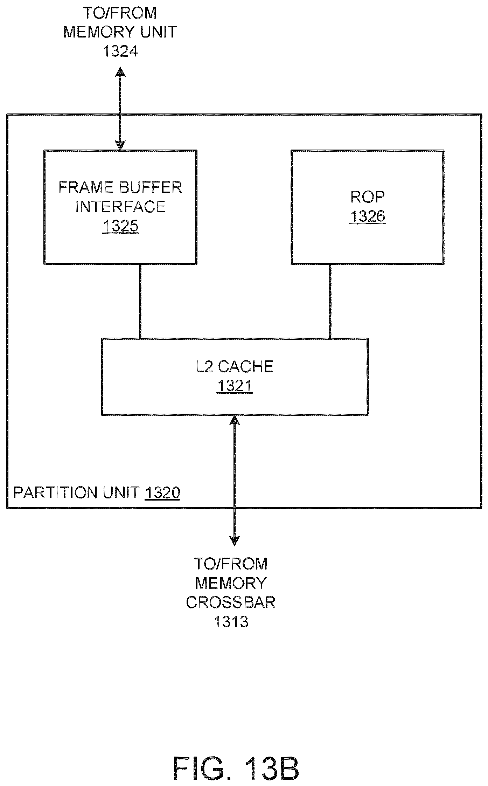

FIG. 13B is a block diagram of a partition unit 1320 according to at least one embodiment. In at least one embodiment, partition unit 1320 is an instance of one of partition units 1320A-1320N of FIG. 13A. In at least one embodiment, partition unit 1320 includes an L2 cache 1321, a frame buffer interface 1325, and a ROP 1326 (raster operations unit). In at least one embodiment, L2 cache 1321 is a read/write cache that is configured to perform load and store operations received from memory crossbar 1316 and ROP 1326. In at least one embodiment, read misses and urgent write-back requests are output by L2 cache 1321 to frame buffer interface 1325 for processing. In at least one embodiment, updates can also be sent to a frame buffer via frame buffer interface 1325 for processing. In at least one embodiment, frame buffer interface 1325 interfaces with one of memory units in parallel processor memory, such as memory units 1324A-1324N of FIG. 13A (e.g., within parallel processor memory 1322).

In at least one embodiment, ROP 1326 is a processing unit that performs raster operations such as stencil, z test, blending, etc. In at least one embodiment, ROP 1326 then outputs processed graphics data that is stored in graphics memory. In at least one embodiment, ROP 1326 includes compression logic to compress depth or color data that is written to memory and decompress depth or color data that is read from memory. In at least one embodiment, compression logic can be lossless compression logic that makes use of one or more of multiple compression algorithms. In at least one embodiment, a type of compression that is performed by ROP 1326 can vary based on statistical characteristics of data to be compressed. For example, in at least one embodiment, delta color compression is performed on depth and color data on a per-tile basis.

In at least one embodiment, ROP 1326 is included within each processing cluster (e.g., cluster 1314A-1314N of FIG. 13A) instead of within partition unit 1320. In at least one embodiment, read and write requests for pixel data are transmitted over memory crossbar 1316 instead of pixel fragment data. In at least one embodiment, processed graphics data may be displayed on a display device, such as one of one or more display device(s) 1510 of FIG. 15, routed for further processing by processor(s) 1302, or routed for further processing by one of processing entities within parallel processor 1300 of FIG. 13A.

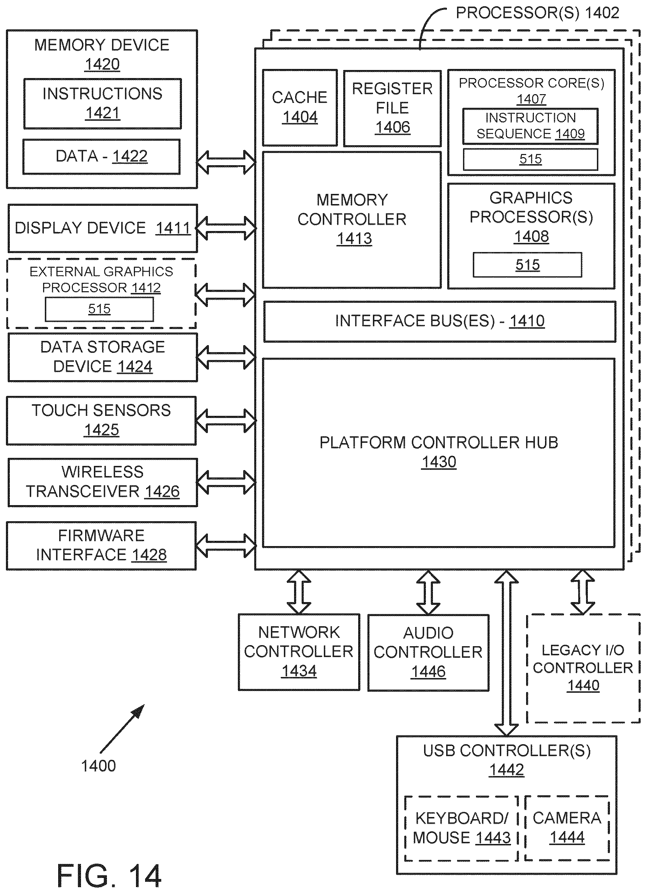

FIG. 14 is a block diagram of a processing system, according to at least one embodiment. In at least one embodiment, system 1400 includes one or more processor(s) 1402 and one or more graphics processor(s) 1408, and may be a single processor desktop system, a multiprocessor workstation system, or a server system having a large number of processor(s) 1402 or processor core(s) 1407. In at least one embodiment, system 1400 is a processing platform incorporated within a system-on-a-chip (SoC) integrated circuit for use in mobile, handheld, or embedded devices. In at least one embodiment, one or more graphics processor(s) 1408 include one or more graphics cores 1200.

In at least one embodiment, system 1400 can include, or be incorporated within a server-based gaming platform, a game console, including a game and media console, a mobile gaming console, a handheld game console, or an online game console. In at least one embodiment, system 1400 is a mobile phone, a smart phone, a tablet computing device or a mobile Internet device. In at least one embodiment, processing system 1400 can also include, couple with, or be integrated within a wearable device, such as a smart watch wearable device, a smart eyewear device, an augmented reality device, or a virtual reality device. In at least one embodiment, processing system 1400 is a television or set top box device having one or more processor(s) 1402 and a graphical interface generated by one or more graphics processor(s) 1408.

In at least one embodiment, one or more processor(s) 1402 each include one or more processor core(s) 1407 to process instructions which, when executed, perform operations for system and user software. In at least one embodiment, each of one or more processor core(s) 1407 is configured to process a specific instruction sequence 1409. In at least one embodiment, instruction sequence 1409 may facilitate Complex Instruction Set Computing (CISC), Reduced Instruction Set Computing (RISC), or computing via a Very Long Instruction Word (VLIW). In at least one embodiment, processor core(s) 1407 may each process a different instruction sequence 1409, which may include instructions to facilitate emulation of other instruction sequences. In at least one embodiment, processor core(s) 1407 may also include other processing devices, such a Digital Signal Processor (DSP).

In at least one embodiment, processor(s) 1402 includes a cache memory 1404. In at least one embodiment, processor(s) 1402 can have a single internal cache or multiple levels of internal cache. In at least one embodiment, cache memory is shared among various components of processor(s) 1402. In at least one embodiment, processor(s) 1402 also uses an external cache (e.g., a Level-3 (L3) cache or Last Level Cache (LLC)) (not shown), which may be shared among processor core(s) 1407 using known cache coherency techniques. In at least one embodiment, a register file 1406 is additionally included in processor(s) 1402, which may include different types of registers for storing different types of data (e.g., integer registers, floating point registers, status registers, and an instruction pointer register). In at least one embodiment, register file 1406 may include general-purpose registers or other registers.

In at least one embodiment, one or more processor(s) 1402 are coupled with one or more interface bus(es) 1410 to transmit communication signals such as address, data, or control signals between processor(s) 1402 and other components in system 1400. In at least one embodiment, interface bus(es) 1410 can be a processor bus, such as a version of a Direct Media Interface (DMI) bus. In at least one embodiment, interface bus(es) 1410 is not limited to a DMI bus, and may include one or more Peripheral Component Interconnect buses (e.g., PCI, PCI Express), memory busses, or other types of interface busses. In at least one embodiment processor(s) 1402 include an integrated memory controller 1416 and a platform controller hub 1430. In at least one embodiment, memory controller 1416 facilitates communication between a memory device and other components of system 1400, while platform controller hub (PCH) 1430 provides connections to I/O devices via a local I/O bus.

In at least one embodiment, a memory device 1420 can be a dynamic random access memory (DRAM) device, a static random access memory (SRAM) device, flash memory device, phase-change memory device, or some other memory device having suitable performance to serve as process memory. In at least one embodiment, memory device 1420 can operate as system memory for system 1400, to store data 1422 and instructions 1421 for use when one or more processor(s) 1402 executes an application or process. In at least one embodiment, memory controller 1416 also couples with an optional external graphics processor 1412, which may communicate with one or more graphics processor(s) 1408 in processor(s) 1402 to perform graphics and media operations. In at least one embodiment, a display device 1411 can connect to processor(s) 1402. In at least one embodiment, display device 1411 can include one or more of an internal display device, as in a mobile electronic device or a laptop device, or an external display device attached via a display interface (e.g., DisplayPort, etc.). In at least one embodiment, display device 1411 can include a head mounted display (HMD) such as a stereoscopic display device for use in virtual reality (VR) applications or augmented reality (AR) applications.

In at least one embodiment, platform controller hub 1430 enables peripherals to connect to memory device 1420 and processor(s) 1402 via a high-speed I/O bus. In at least one embodiment, I/O peripherals include, but are not limited to, an audio controller 1446, a network controller 1434, a firmware interface 1428, a wireless transceiver 1426, touch sensors 1425, a data storage device 1424 (e.g., hard disk drive, flash memory, etc.). In at least one embodiment, data storage device 1424 can connect via a storage interface (e.g., SATA) or via a peripheral bus, such as a Peripheral Component Interconnect bus (e.g., PCI, PCI Express). In at least one embodiment, touch sensors 1425 can include touch screen sensors, pressure sensors, or fingerprint sensors. In at least one embodiment, wireless transceiver 1426 can be a Wi-Fi transceiver, a Bluetooth transceiver, or a mobile network transceiver such as a 3G, 4G, or Long Term Evolution (LTE) transceiver. In at least one embodiment, firmware interface 1428 enables communication with system firmware, and can be, for example, a unified extensible firmware interface (UEFI). In at least one embodiment, network controller 1434 can enable a network connection to a wired network. In at least one embodiment, a high-performance network controller (not shown) couples with interface bus(es) 1410. In at least one embodiment, audio controller 1446 is a multi-channel high definition audio controller. In at least one embodiment, system 1400 includes an optional legacy I/O controller 1440 for coupling legacy (e.g., Personal System 2 (PS/2)) devices to system 1400. In at least one embodiment, platform controller hub 1430 can also connect to one or more Universal Serial Bus (USB) controller(s) 1442 connect input devices, such as keyboard and mouse 1443 combinations, a camera 1444, or other USB input devices.

In at least one embodiment, an instance of memory controller 1416 and platform controller hub 1430 may be integrated into a discreet external graphics processor, such as external graphics processor 1412. In at least one embodiment, platform controller hub 1430 and/or memory controller 1416 may be external to one or more processor(s) 1402. For example, in at least one embodiment, system 1400 can include an external memory controller 1416 and platform controller hub 1430, which may be configured as a memory controller hub and peripheral controller hub within a system chipset that is in communication with processor(s) 1402.

Embodiments presented herein can perform attestation for an entire network topology, and can restrict a flow of data or traffic through only trusted paths through trusted devices.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. At least one processor, comprising: one or more logical units to: determine that attestation is to be performed for a set of devices to be included in a managed network deployment; cause individual devices of the set to perform self-attestation and transmit, in respective network management messages, evidence for the self-attestation; and verify, by a managing device of the managed network deployment, trust in one or more of the devices of the managed network deployment at least a portion of the evidence for the self-attestation received in one or more of the network management messages.
Clause 2. The at least one processor of clause 1, wherein the devices of the managed network deployment include at least one of servers, processors, network interface cards, routers, load balancers, network switches, or core switches.
Clause 3. The at least one processor of clause 1, wherein the one or more logical units are further to cause a first set of devices of the managed network deployment to send the evidence for the self-attestation in network management messages to one or more second devices of the managed network deployment for verification, wherein the managing device receives network management messages from at most the one or more second devices.
Clause 4. The at least one processor of clause 1, wherein the one or more logical units are further to determine to perform the attestation for the set of devices to be included in the managed network deployment corresponding to an initial network configuration, a periodic reverification, or a connection of a new network device.
Clause 5. The at least one processor of clause 1, wherein the respective network management messages comprise messages to be used by a network controller to manage network devices of the managed network deployment.
Clause 6. The at least one processor of clause 5, wherein the network controller is to automatically request an attestation report and verify the trust in the devices to be included before configuring the managed network deployment.
Clause 7. The at least one processor of clause 1, wherein the one or more logical units are to assign trusted devices to a first subnet and untrusted devices to a second subnet of the managed network deployment.
Clause 8. The at least one processor of clause 1, wherein the network management messages correspond to management datagrams (MADs) of an InfiniBand deployment, and wherein the MAD headers are extended to include the evidence for the self-attestation.
Clause 9. The at least one processor of clause 1, wherein the one or more logical units are further to identify at least one trusted path through the managed network deployment corresponding to devices of the set where the self-attestation is verified.
Clause 10. A system, comprising: one or more processors to: determine that attestation is to be performed for a set of devices to be included in a managed network deployment; cause individual devices of the set to perform self-attestation and transmit, in respective network management messages, evidence for the self-attestation; and verify, by a managing device of the managed network deployment receiving the respective network management messages, trust in one or more of the devices of the managed network deployment based in part on at least a portion of the evidence for the self-attestation.
Clause 11. The system of clause 10, wherein the one or more processors are further to cause a first set of devices of the managed network deployment to send the evidence for the self-attestation in network management messages to one or more second devices of the managed network deployment for verification, wherein the managing device receives network management messages from at most the one or more second devices.
Clause 12. The system of clause 10, wherein the evidence for the self-attestation includes one or more values representative of a state of the individual devices.
Clause 13. The system of clause 12, wherein the evidence is signed using an endorsement from respective manufacturers of the individual devices.
Clause 14. The system of clause 10, wherein the one or more processors are further to identify at least one trusted path through the managed network deployment corresponding to devices of the set where the self-attestation is verified, and wherein trusted data is to be propagated using only the at least one trusted path through the managed network deployment.
Clause 15. The system of clause 10, wherein the system is at least one of: a system for performing simulation operations; a system for performing simulation operations to test or
validate autonomous machine applications; a system for performing digital twin operations; a system for performing light transport simulation; a system for rendering graphical output; a system for performing deep learning operations; a system for performing generative AI operations using a large language model (LLM); a system implemented using an edge device; a system for generating or presenting virtual reality (VR) content; a system for generating or
presenting augmented reality (AR) content; a system for generating or presenting mixed reality (MR) content; a system incorporating one or more Virtual Machines (VMs); a system implemented at least partially in a data center; a system for performing hardware testing using simulation; a system for performing generative operations using a language model (LM); a system for synthetic data generation; a collaborative content creation platform for 3D assets; or a system implemented at least partially using cloud computing resources.
Clause 16. A subnet manager, comprising: one or more processing units to: broadcast a request for attestation that is to be performed by devices in a managed subnet; receive, from the devices of the managed subnet, respective network management messages including self-attestation evidence for the devices; and verify trust in one or more of the devices of the managed subnet based in part on at least a portion of the evidence for the self-attestation received in one or more of the network management messages.
Clause 17. The subnet manager of clause 16, wherein the one or more processing units are further to cause a first set of devices of the managed subnet to send the evidence for the self-attestation in network management messages to one or more second devices of the managed subnet for verification, wherein the subnet manager receives the network management messages from at most the one or more second devices.
Clause 18. The subnet manager of clause 16, wherein the one or more processing units are further to determine to perform the attestation for the set of devices to be included in the managed subnet corresponding to an initial network configuration, a periodic reverification, or a connection of a new network device.
Clause 19. The subnet manager of clause 16, wherein the evidence for the self-attestation includes one or more values representative of a state of the individual devices.
Clause 20. The subnet manager of clause 19, wherein the evidence is signed using an endorsement from respective manufacturers of the individual devices.

## Claims

1. At least one processor, comprising:
one or more logical units to:
determine that attestation is to be performed for a set of devices to be included in a managed network deployment;
cause individual devices of the set to perform self-attestation and transmit, in respective network management messages, evidence for the self-attestation; and
verify, by a managing device of the managed network deployment, trust in one or more of the devices of the managed network deployment at least a portion of the evidence for the self-attestation received in one or more of the network management messages.

2. The at least one processor of claim 1, wherein the devices of the managed network deployment include at least one of servers, processors, network interface cards, routers, load balancers, network switches, or core switches.

3. The at least one processor of claim 1 or 2, wherein the one or more logical units are further to cause a first set of devices of the managed network deployment to send the evidence for the self-attestation in network management messages to one or more second devices of the managed network deployment for verification, wherein the managing device receives network management messages from at most the one or more second devices.

4. The at least one processor of claim 1, 2, or 3, wherein the one or more logical units are further to determine to perform the attestation for the set of devices to be included in the managed network deployment corresponding to an initial network configuration, a periodic reverification, or a connection of a new network device.

5. The at least one processor of claims 1-4, wherein the respective network management messages comprise messages to be used by a network controller to manage network devices of the managed network deployment, wherein the network controller is to automatically request an attestation report and verify the trust in the devices to be included before configuring the managed network deployment.

6. The at least one processor of any of claims 1-5, wherein the one or more logical units are to assign trusted devices to a first subnet and untrusted devices to a second subnet of the managed network deployment.

7. The at least one processor of any of claims 1-6, wherein the network management messages correspond to management datagrams (MADs) of an InfiniBand deployment, and wherein the MAD headers are extended to include the evidence for the self-attestation.

8. The at least one processor of any of claims 1-7, wherein the one or more logical units are further to identify at least one trusted path through the managed network deployment corresponding to devices of the set where the self-attestation is verified.

9. A system, comprising:
one or more processors to:
determine that attestation is to be performed for a set of devices to be included in a managed network deployment;
cause individual devices of the set to perform self-attestation and transmit, in respective network management messages, evidence for the self-attestation; and
verify, by a managing device of the managed network deployment receiving the respective network management messages, trust in one or more of the devices of the managed network deployment based in part on at least a portion of the evidence for the self-attestation.

10. The system of claim 9, wherein the one or more processors are further to cause a first set of devices of the managed network deployment to send the evidence for the self-attestation in network management messages to one or more second devices of the managed network deployment for verification, wherein the managing device receives network management messages from at most the one or more second devices.

11. The system of claim 9 or 10, wherein the evidence for the self-attestation includes one or more values representative of a state of the individual devices, wherein the evidence is signed using an endorsement from respective manufacturers of the individual devices.

12. The system of claim 9, 10, or 11, wherein the one or more processors are further to identify at least one trusted path through the managed network deployment corresponding to devices of the set where the self-attestation is verified, and wherein trusted data is to be propagated using only the at least one trusted path through the managed network deployment, wherein the system is at least one of:
a system for performing simulation operations;
a system for performing simulation operations to test or validate autonomous machine applications;
a system for performing digital twin operations;
a system for performing light transport simulation;
a system for rendering graphical output;
a system for performing deep learning operations;
a system for performing generative AI operations using a large language model (LLM);
a system implemented using an edge device;
a system for generating or presenting virtual reality (VR) content;
a system for generating or presenting augmented reality (AR) content;
a system for generating or presenting mixed reality (MR) content;
a system incorporating one or more Virtual Machines (VMs);
a system implemented at least partially in a data center;
a system for performing hardware testing using simulation;
a system for performing generative operations using a language model (LM);
a system for synthetic data generation;
a collaborative content creation platform for 3D assets; or
a system implemented at least partially using cloud computing resources.

13. A subnet manager, comprising:
one or more processing units to:
broadcast a request for attestation that is to be performed by devices in a managed subnet;
receive, from the devices of the managed subnet, respective network management messages including self-attestation evidence for the devices; and
verify trust in one or more of the devices of the managed subnet based in part on at least a portion of the evidence for the self-attestation received in one or more of the network management messages.

14. The subnet manager of claim 13, wherein the one or more processing units are further to cause a first set of devices of the managed subnet to send the evidence for the self-attestation in network management messages to one or more second devices of the managed subnet for verification, wherein the subnet manager receives the network management messages from at most the one or more second devices.

15. The subnet manager of claim 13 or 14, wherein the one or more processing units are further to determine to perform the attestation for the set of devices to be included in the managed subnet corresponding to an initial network configuration, a periodic reverification, or a connection of a new network device, wherein the evidence for the self-attestation includes one or more values representative of a state of the individual devices, wherein the evidence is signed using an endorsement from respective manufacturers of the individual devices.
